# EUROPEAN PATENT APPLICATION

(11) **EP 4 527 693 A1**
(43) Date of publication of application: **26.03.2025**
(21) Application number: 23862267.4
(22) Date of filing: 31.08.2023
(51) Int. Cl.: B60Q 5/00, B60L 58/12, B60L 3/12

(54) **CHARGING REMINDING METHOD AND DEVICE, AND VEHICLE**

(30) Priority: 05.09.2022 CN 202211080954
(71) Applicant: Huawei Technologies Co., Ltd., Shenzhen, Guangdong 518129 (CN)
(72) Inventor: LI, Lingfei, Shenzhen, Guangdong 518129 (CN); WANG, Yincheng, Shenzhen, Guangdong 518129 (CN); LI, Gang, Shenzhen, Guangdong 518129 (CN); JI, Xiang, Shenzhen, Guangdong 518129 (CN); CHEN, Jiacheng, Shenzhen, Guangdong 518129 (CN); CHEN, Yu, Shenzhen, Guangdong 518129 (CN); NI, Hongfeng, Shenzhen, Guangdong 518129 (CN); WU, Xuechen, Shenzhen, Guangdong 518129 (CN)
(74) Representative: Körber, Martin Hans
(86) International application number: PCT/CN2023/116202
(87) International publication number: WO 2024/051573

(57) **Abstract**

This application provides a charging reminding method and apparatus, and a vehicle. The method includes: determining, based on a habitual-charging battery level range of a user, a temperature, or a user type, whether the user needs to be reminded to perform charging, where a minimum battery level in the habitual-charging battery level range is a first battery level value, a maximum battery level in the habitual-charging battery level range is a second battery level value, the second battery level value is greater than or equal to the first battery level value, and the user type includes a home charging user or a non-home charging user; and sending a proper charging reminder notification to the user when it is determined that the user needs to be reminded to perform charging. This can effectively avoid an anxiety emotion generated by the user because a remaining battery level of an electric vehicle is lower than a psychological safety threshold range of the user. In addition, this can further effectively avoid inconvenience to the user due to a decrease in a remaining battery level of a charging object caused by a sudden temperature change, thereby improving user experience.

## Description

This application claims priority to Chinese Patent Application No. 202211080954.9, filed with the China National Intellectual Property Administration on September 5, 2022, and entitled "CHARGING REMINDING METHOD AND APPARATUS, AND VEHICLE", which is incorporated herein by reference in its entirety.

### TECHNICAL FIELD

This application relates to the vehicle field, and more specifically, to a charging reminding method and apparatus, and a vehicle.

### BACKGROUND

With popularization of electric vehicles, charging a vehicle becomes a routine operation in daily life for users of the electric vehicles. Under this circumstance, the users of the electric vehicles have an increasingly strong demand for intelligent and proper charging reminders.

### SUMMARY

Embodiments of this application provide a charging reminding method and apparatus, and a vehicle. According to the method, whether a user needs to be reminded to perform charging can be determined based on a habitual-charging battery level range of the user, a temperature, or a user type. This can effectively avoid an anxiety emotion generated by the user because a remaining battery level of an electric vehicle is lower than a psychological safety threshold range of the user. In addition, this can further effectively avoid inconvenience to the user due to a decrease in a remaining battery level of a charging object caused by a sudden temperature change, thereby improving user experience.

According to a first aspect, a charging reminding method is provided. The method includes: determining, based on a habitual-charging battery level range of a user and a user type, whether the user needs to be reminded to perform charging, where a minimum battery level in the habitual-charging battery level range is a first battery level value, a maximum battery level in the habitual-charging battery level range is a second battery level value, the second battery level value is greater than or equal to the first battery level value, and the user type includes a home charging user or a non-home charging user; and sending a charging reminder notification to the user when it is determined that the user needs to be reminded to perform charging.

Optionally, the habitual-charging battery level range of the user may alternatively be a value. In other words, the first battery level value is equal to the second battery level value.

It should be understood that, in this embodiment of this application, the home charging user mentioned is a user whose habitual-charging location is a home charging pile, and the non-home charging user is a user whose habitual-charging location is not a home charging pile. The home charging pile, for example, may be a charging pile in a parking lot of a community in which the user resides, may be a charging pile corresponding to a home-fixed parking space of the user, or may be a charging pile whose distance from a home address of the user is less than a specified range.

Optionally, whether the user is a home charging user may be input by the user in a system according to a situation of the user, or may be learned by a system according to a charging habit of the user. The charging habit of the user may be a charging habit of the user in a period of time, or may be a charging habit corresponding to a specified quantity of consecutive charging times of the user.

Optionally, when the habitual-charging battery level range of the user is lower than a recommended charging battery level range, a prompt notification is sent to the user. The prompt notification is used to remind the user that the habitual-charging battery level range of the user is relatively low, a low battery level is not conducive to battery health, and it is suggested that the charging habit should be changed.

The recommended charging battery level range may be determined based on performance of a battery used by a charging object. When the user performs charging in a case in which a remaining battery level is in the recommended charging battery level range, impact of an excessively low battery level on a service life and performance of the battery can be avoided.

In this embodiment of this application, it can be determined, based on the charging habit of the user and the user type, whether the user needs to be reminded to perform charging; and when it is determined that the user needs to be reminded to perform charging, the charging reminder notification is sent to the user. This can effectively avoid an anxiety emotion generated by the user because a remaining battery level of an electric vehicle is lower than a psychological safety threshold range of the user. In addition, based on the user type, the user is reminded to perform charging, so that a manner and timing of sending a charging reminder can be better matched with the user habit, thereby improving user experience.

With reference to the first aspect, in some implementations of the first aspect, the determining, based on a habitual-charging battery level range of a user and a user type, whether the user needs to be reminded to perform charging includes: determining, based on a next-day temperature, the habitual-charging battery level range of the user, and the user type, whether the user needs to be reminded to perform charging.

A temperature has relatively great impact on an endurance distance of the battery of the electric vehicle. In this embodiment of this application, whether the charging object needs to be charged is further determined based on the next-day temperature; and when it is determined that charging is needed, the user is reminded to perform charging. This can effectively avoid a case that a current use requirement of the user cannot be met because the remaining battery level of the electric vehicle is reduced due to a sudden temperature change, thereby improving user experience.

With reference to the first aspect, in some implementations of the first aspect, the determining, based on a habitual-charging battery level range of a user and a user type, whether the user needs to be reminded to perform charging includes: when the user is a home charging user, a status of the charging object is switched to a non-moving state, a distance between the charging object and a home address is less than a third threshold, and a current remaining battery level of the charging object is less than or equal to the second battery level value, determining that the user needs to be reminded to perform charging.

Optionally, the charging object is an electric vehicle or may be an intelligent robot.

Further, the sending a charging reminder notification to the user when it is determined that the user needs to be reminded to perform charging includes: when it is determined that the user needs to be reminded to perform charging, sending a first charging reminder to the user, where the first charging reminder includes a first charging reminder notification displayed on a screen of the charging object, and further includes a first charging reminder voice, the first charging reminder notification is associated with a first control, and the first control is used by the user to open a charging port of the charging object.

That a status of the charging object is switched to a non-moving state may indicate that, for example, it is detected that the user parks the vehicle (the user shifts to a P gear).

Optionally, the third threshold may be any value in a range of 0 m to 300 m, or may be another value determined based on a user input. This is not limited in this application.

The charging port of the charging object may be a slow charging port, or may be a fast charging port. A home charging user usually uses the slow charging port for charging, and a non-home charging user usually uses the fast charging port for charging.

Optionally, the first charging reminder notification and/or the first charging reminder voice may be, for example, "According to your charging habit, charging is needed."

In this embodiment of this application, on the basis of determining, according to the charging habit of the user, whether to reminder the user to perform charging, whether the charging object is a home charging user and the status (a moving state or a non-moving state) of the charging object are comprehensively considered, so that a charging reminder is sent to the user in a charging reminder form that matches a current situation. In this way, not only the user can be reminded in a timely manner when the user needs to be reminded to perform charging, but also the reminding manner can adapt to a current status of the user, thereby further improving user experience.

With reference to the first aspect, in some implementations of the first aspect, the determining, based on a next-day temperature, the habitual-charging battery level range of the user, and the user type, whether the user needs to be reminded to perform charging includes: when the user is a home charging user, a status of the charging object is switched to a non-moving state, a distance between the charging object and a home address is less than a third threshold, the next-day temperature is lower than a first threshold or higher than a second threshold, and a current remaining battery level of the charging object is less than or equal to a third battery level value, determining that the user needs to be reminded to perform charging, where the third battery level value is greater than the second battery level value.

Further, the sending a charging reminder notification to the user when it is determined that the user needs to be reminded to perform charging includes: when it is determined that the user needs to be reminded to perform charging, sending a first charging reminder to the user, where the first charging reminder includes a first charging reminder notification displayed on a screen of the charging object, and further includes a first charging reminder voice, the first charging reminder notification is associated with a first control, and the first control is used by the user to open a charging port of the charging object.

Optionally, the third battery level value may be an endurance distance of 200 km.

Optionally, the third battery level value may be determined based on the habitual-charging battery level range (the first battery level value, the second battery level value) of the user, for example, may be the second battery level value + 50 km.

A temperature range less than the first threshold is an extreme-cold range, and a temperature range greater than the second threshold is an extreme-hot range. It should be understood that extreme-cold ranges or extreme-hot ranges corresponding to different areas may vary, and determining of the extreme-cold range or the extreme-hot range is related to a battery model.

Optionally, in general, the extreme-cold range may be that a temperature is lower than -10°C (that is, the first threshold may be -10°C), and the extreme-hot range may be that a temperature is higher than 40°C (that is, the first threshold may be 40°C).

Optionally, the first charging reminder notification and/or the first charging reminder voice may be, for example, "The temperature is low tomorrow, and you are suggested to perform charging in advance".

In this embodiment of this application, on the basis of determining, according to the charging habit of the user and the next-day temperature, whether to reminder the user to perform charging, whether the charging object is a home charging user and the status (a moving state or a non-moving state) of the charging object are comprehensively considered, so that a charging reminder is sent to the user in a charging reminder form that matches a current situation. In this way, not only the user can be reminded in a timely manner when the user needs to be reminded to perform charging, but also the reminding manner can adapt to a current status of the user, thereby further improving user experience.

With reference to the first aspect, in some implementations of the first aspect, the determining, based on a habitual-charging battery level range of a user and a user type, whether the user needs to be reminded to perform charging includes: when the user is a non-home charging user and the charging object is in a moving state, periodically determining a current remaining battery level of the charging object; and when the current remaining battery level of the charging object is less than or equal to the second battery level value, determining that the user needs to be reminded to perform charging.

The periodically determining a current remaining battery level of the charging object may be as follows: determining the current remaining battery level of the charging object at a regular interval.

Further, in an implementation, the sending a charging reminder notification to the user when it is determined that the user needs to be reminded to perform charging includes: when the current remaining battery level of the charging object is less than or equal to the second battery level value and is greater than the first battery level value, sending a second charging reminder to the user, where the second charging reminder includes a second charging reminder notification displayed on a screen of the charging object, and the second charging reminder notification is displayed in a form of a suggestion card in a lower area of the screen of the charging object.

Optionally, the suggestion card may be a Celia suggestion card, or may be a card in another form. This is not limited in this application.

Optionally, the second charging reminder notification is displayed in a form of a suggestion card in a lower quarter area of the screen of the charging object.

Optionally, the second charging reminder notification is displayed in a form of a suggestion card in a blank space of the screen of the charging object.

In another implementation, the sending a charging reminder notification to the user when it is determined that the user needs to be reminded to perform charging includes: when the current remaining battery level of the charging object is less than or equal to the first battery level value, sending a third charging reminder to the user, where the third charging reminder includes a third charging reminder notification displayed on a screen of the charging object, and further includes a third charging reminder voice, the third charging reminder notification is associated with a third control, and the third control is used by the user to navigate to a target charging station.

Optionally, the target charging station is associated with a prompt tag, and the prompt tag is used to prompt the user with entertainment information corresponding to the target charging station.

In this embodiment of this application, when the charging object is in a moving state, for security purposes or to avoid that a use process is not interrupted or the like, when a battery level is within the habitual battery level range of the user, a weak reminder (for example, in a form of a suggestion card) is sent to the user; or when a battery level is lower than the habitual battery level range of the user, a strong reminder (for example, a charging reminder notification is displayed and a charging reminder voice is sent) is sent to the user. In this way, not only the user can be reminded to perform charging according to the charging habit of the user, but also charging reminders of different intensity levels can be sent to the user in different cases further based on the status of the charging object, the remaining battery level, and the like. In addition, a target charging station recommended based on the charging reminder notification is associated with entertainment information, so that the user can further determine the target charging station and arrange a subsequent schedule based on the entertainment information associated with the target charging station, thereby further improving user experience.

With reference to the first aspect, in some implementations of the first aspect, the method further includes: when a next-day temperature is lower than a first threshold or higher than a second threshold, and the current remaining battery level of the charging object is less than or equal to a third battery level value, sending the third charging reminder to the user, where the third battery level value is greater than the second battery level value.

In this embodiment of this application, when the charging object is in a moving state (for example, the vehicle is in a traveling state), on the basis of determining, based on the habitual-charging battery level range of the user and the user type, whether the user needs to be reminded to perform charging, whether the charging object needs to be charged is further determined based on the next-day temperature; and when it is determined that charging is needed, the user is reminded to perform charging. This can effectively avoid a case that a current use requirement of the user cannot be met because the remaining battery level of the electric vehicle is reduced due to a sudden temperature change, thereby improving user experience.

With reference to the first aspect, in some implementations of the first aspect, the method further includes: sending a fourth charging reminder notification to the user when it is determined that the user needs to be reminded to perform charging, where the fourth charging reminder notification includes one or more of the following options: a charging reminder card displayed on a screen of a first electronic device, a charging reminder voice sent by the first electronic device, an ambient light reminder sent by the charging object, or a fragrance reminder sent by the charging object, and the first electronic device has a binding relationship with the charging object.

Optionally, the first electronic device may be a device with a screen such as a mobile phone, a tablet, a projector, a television, a band, or a watch, or may be a device without a screen such as a speaker.

In this embodiment of this application, when the first charging reminder, the second charging reminder, or the third charging reminder can be sent to the user, the fourth charging reminder notification can be sent to the user by using a fragrance system, a light system, another electronic device, or the like, so that the user can receive the charging reminder in a timely manner. In addition, the user can have better experience in combination with a plurality of manners.

With reference to the first aspect, in some implementations of the first aspect, the sending a fourth charging reminder notification to the user when it is determined that the user needs to be reminded to perform charging includes: when the user is a non-home charging user and the charging object is in a non-moving state, determining the current remaining battery level of the charging object at a scheduled time; and when the current remaining battery level of the charging object is less than or equal to the second battery level value, sending the fourth charging reminder notification to the user.

The determining the current remaining battery level of the charging object at a scheduled time means determining the current remaining battery level of the charging object at one or more fixed time points. For example, the current remaining battery level of the charging object may be determined at 4:00 p.m. every day, or the current remaining battery level of the charging object may be determined at 10:00 a.m. every day and 7:00 p.m. every day. The fixed time point may be another time point determined based on a user input, or may be a time point that is specified by a system by default or automatically. This is not limited in this application.

In this embodiment of this application, when the charging object is in a non-use state and the battery level is insufficient, a charging reminder may be sent to the user by using a bound device such as a mobile phone, to avoid that the battery level of the charging object is excessively low because the charging object is not used for a long period of time.

With reference to the first aspect, in some implementations of the first aspect, the method further includes: when the next-day temperature is lower than the first threshold or higher than the second threshold, and the current remaining battery level of the charging object is less than or equal to the third battery level value, sending the fourth charging reminder to the user.

In this embodiment of this application, impact of the temperature on the battery is further considered. This can effectively avoid a case that a current use requirement of the user cannot be met because the remaining battery level of the charging object is reduced due to a sudden temperature change, thereby improving user experience.

According to a second aspect, a charging reminding method is provided. The method includes: determining, based on a next-day temperature, whether a user needs to be reminded to perform charging; and sending a charging reminder notification to the user when it is determined that the user needs to be reminded to perform charging.

In this embodiment of this application, whether a charging object needs to be charged can be determined based on the next-day temperature; and when it is determined that the charging object needs to be charged, the user is reminded to perform charging. This can effectively avoid a case that a current use requirement of the user cannot be met because a remaining battery level of the charging object is reduced due to a sudden temperature change, thereby improving user experience.

With reference to the second aspect, in some implementations of the second aspect, the determining, based on a next-day temperature, whether a user needs to be reminded to perform charging includes: determining, based on a user type and the next-day temperature, whether the user needs to be reminded to perform charging, where the user type includes a home charging user or a non-home charging user.

It should be understood that, in this embodiment of this application, the home charging user mentioned is a user whose habitual-charging location is a home charging pile, and the non-home charging user is a user whose habitual-charging location is not a home charging pile. The home charging pile, for example, may be a charging pile in a parking lot of a community in which the user resides, may be a charging pile corresponding to a home-fixed parking space of the user, or may be a charging pile whose distance from a home address of the user is less than a specified range.

Optionally, whether the user is a home charging user may be input by the user in a system according to a situation of the user, or may be learned by a system according to a charging habit of the user. The charging habit of the user may be a charging habit of the user in a period of time, or may be a charging habit corresponding to a specified quantity of consecutive charging times of the user.

In this embodiment of this application, on the basis of determining, based on the next-day temperature, whether to reminder the user to perform charging, whether an electric vehicle is a home charging user is comprehensively considered, and different reminding rules (reminder trigger conditions) are respectively specified for a home charging user and a non-home charging user. In this way, a time when a charging reminder is sent can be matched with the user habit, thereby further improving user experience.

With reference to the second aspect, in some implementations of the second aspect, the determining, based on a next-day temperature, whether a user needs to be reminded to perform charging includes: determining, based on a habitual-charging battery level range of the user, the next-day temperature, and the user type, whether the user needs to be reminded to perform charging, where a minimum battery level in the habitual-charging battery level range is a first battery level value, a maximum battery level in the habitual-charging battery level range is a second battery level value, and the second battery level value is greater than or equal to the first battery level value.

Optionally, the habitual-charging battery level range of the user may alternatively be a value. In other words, the first battery level value is equal to the second battery level value.

In this embodiment of this application, on the basis of determining, based on a charging type of the user and the next-day temperature, whether to reminder the user to perform charging, the charging habit of the user is comprehensively considered, so that a charging reminder is sent to the user in a charging reminder form that matches a current situation. This can effectively avoid an anxiety emotion generated by the user because a remaining battery level of an electric vehicle is lower than a psychological safety threshold range of the user, thereby further improving user experience.

With reference to the second aspect, in some implementations of the second aspect, the determining, based on a next-day temperature, whether a user needs to be reminded to perform charging includes: when the next-day temperature is lower than a first threshold or higher than a second threshold, and the remaining battery level of the charging object is less than or equal to a third battery level value, determining that the user needs to be reminded to perform charging.

The third battery level value is greater than the second battery level value.

Optionally, the third battery level value may be an endurance distance of 200 km.

Optionally, the third battery level value may be determined based on the habitual-charging battery level range of the user. A minimum battery level in the habitual-charging battery level range is a first battery level value, a maximum battery level in the habitual-charging battery level range is a second battery level value, the second battery level value is greater than or equal to the first battery level value, and the third battery level value is greater than the second battery level value, for example, may be the second battery level value + 50 km.

A temperature range less than the first threshold is an extreme-cold range, and a temperature range greater than the second threshold is an extreme-hot range. It should be understood that extreme-cold ranges or extreme-hot ranges corresponding to different areas may vary, and determining of the extreme-cold range or the extreme-hot range is related to a battery model.

Optionally, in general, the extreme-cold range may be that a temperature is lower than -10°C (that is, the first threshold may be -10°C), and the extreme-hot range may be that a temperature is higher than 40°C (that is, the first threshold may be 40°C).

Optionally, the charging object is an electric vehicle or may be an intelligent robot.

In this embodiment of this application, when the next-day temperature is extremely cold or extremely hot, it indicates that the temperature has relatively significant impact on a battery. In the two cases, considering the impact of the temperature on the battery, a charging threshold of the user is appropriately increased, so that the user is reminded in advance to perform charging. This can avoid inconvenience to the user due to a decrease in the remaining battery level of the charging object caused by a sudden temperature change, thereby improving user experience.

With reference to the second aspect, in some implementations of the second aspect, the determining, based on a user type and the next-day temperature, whether the user needs to be reminded to perform charging includes: when the user is a home charging user, a status of the charging object is switched to a non-moving state, a distance between the charging object and a home address is less than a third threshold, the next-day temperature is lower than a first threshold or higher than a second threshold, and the remaining battery level of the charging object is less than or equal to a third battery level value, determining that the user needs to be reminded to perform charging.

Optionally, the third threshold may be any value in a range of 0 m to 300 m, or may be another value determined based on a user input. This is not limited in this application.

Further, the sending a charging reminder notification to the user when it is determined that the user needs to be reminded to perform charging includes: when it is determined that the user needs to be reminded to perform charging, sending a first charging reminder to the user, where the first charging reminder includes a first charging reminder notification displayed on a screen of the charging object, and further includes a first charging reminder voice, the first charging reminder notification is associated with a first control, and the first control is used by the user to open a charging port of the charging object.

The charging port of the charging object may be a slow charging port, or may be a fast charging port. A home charging user usually uses the slow charging port for charging, and a non-home charging user usually uses the fast charging port for charging.

Optionally, the first charging reminder notification and/or the first charging reminder voice may be, for example, "The temperature is low tomorrow, and you are suggested to perform charging in advance".

In this embodiment of this application, on the basis of determining, based on the user type and the next-day temperature, whether to reminder the user to perform charging, whether the charging object is a home charging user and the status (a moving state or a non-moving state) of the charging object are comprehensively considered, so that a charging reminder is sent to the user in a charging reminder form that matches a current situation. In this way, not only the user can be reminded in a timely manner when the user needs to be reminded to perform charging, but also the reminding manner can adapt to a current status of the user, thereby further improving user experience.

With reference to the second aspect, in some implementations of the second aspect, the determining, based on a user type and the next-day temperature, whether the user needs to be reminded to perform charging; and sending a charging reminder notification to the user when it is determined that the user needs to be reminded to perform charging includes: when the user is a non-home charging user, it is detected that the charging object is started, the next-day temperature is lower than a first threshold or higher than a second threshold, and a current remaining battery level of the charging object is less than or equal to a third battery level value, determining that the user needs to be reminded to perform charging, and further sending a third charging reminder to the user, where the third charging reminder includes a third charging reminder notification displayed on a screen of the charging object, and further includes a third charging reminder voice, the third charging reminder notification is associated with a third control, and the third control is used by the user to navigate to a target charging station.

Optionally, the target charging station is associated with a prompt tag, and the prompt tag is used to prompt the user with entertainment information corresponding to the target charging station.

In this embodiment of this application, when the charging object is a non-home charging user and is started, whether to reminder the user to perform charging is determined based on the next-day temperature, and a charging reminder notification is sent when the user needs to be reminded. In this case, the charging reminder notification is associated with a recommended charging station. In addition, the target charging station is associated with entertainment information, so that the user can further determine the target charging station and arrange a subsequent schedule based on the entertainment information associated with the target charging station, thereby further improving user experience.

With reference to the second aspect, in some implementations of the second aspect, the method further includes: sending a fourth charging reminder notification to the user when it is determined that the user needs to be reminded to perform charging, where the fourth charging reminder notification includes one or more of the following options: a charging reminder card displayed on a screen of a first electronic device, a charging reminder voice sent by the first electronic device, an ambient light reminder sent by the charging object, or a fragrance reminder sent by the charging object, and the first electronic device has a binding relationship with the charging object.

In this embodiment of this application, when the first charging reminder or the third charging reminder can be sent to the user, the fourth charging reminder notification can be sent to the user by using a fragrance system, a light system, another electronic device, or the like, so that the user can receive the charging reminder in a timely manner. In addition, the user can have better experience in combination with a plurality of manners.

With reference to the second aspect, in some implementations of the second aspect, the sending a fourth charging reminder notification to the user when it is determined that the user needs to be reminded to perform charging includes: when the user is a non-home charging user and the charging object is in a non-moving state, determining the current remaining battery level of the charging object at a scheduled time; and when the next-day temperature is lower than the first threshold or higher than the second threshold, and the current remaining battery level of the charging object is less than or equal to the third battery level value, sending the fourth charging reminder notification to the user.

The determining the current remaining battery level of the charging object at a scheduled time means determining the current remaining battery level of the charging object at one or more fixed time points. For example, the current remaining battery level of the charging object may be determined at 4:00 p.m. every day, or the current remaining battery level of the charging object may be determined at 10:00 a.m. every day and 7:00 p.m. every day. The fixed time point may be another time point determined based on a user input, or may be a time point that is specified by a system by default or automatically. This is not limited in this application.

In this embodiment of this application, when the charging object is in a non-use state and the battery level is insufficient, a charging reminder may be sent to the user by using a bound device such as a mobile phone, to avoid that the battery level of the charging object is excessively low because the charging object is not used for a long period of time.

With reference to the second aspect, in some implementations of the second aspect, the method further includes: determining the third battery level value based on the habitual-charging battery level range of the user.

According to a third aspect, a charging reminding apparatus is provided. The apparatus includes: one or more processors; one or more memories; and one or more computer programs. The one or more computer programs are stored in the one or more memories, and the one or more computer programs include instructions. When the instructions are executed by the one or more processors, the apparatus is enabled to perform the method according to any one of the first aspect or the possible implementations of the first aspect or the method according to any one of the second aspect or the possible implementations of the second aspect.

According to a fourth aspect, a vehicle is provided, and the vehicle includes the charging reminding apparatus according to the third aspect.

According to a fifth aspect, a computer-readable storage medium is provided. The computer-readable storage medium stores a computer program or instructions. When the computer program or the instructions are executed, the method according to any one of the first aspect or the possible implementations of the first aspect is implemented, or the method according to any one of the second aspect or the possible implementations of the second aspect is implemented.

According to a sixth aspect, a chip is provided, where the chip stores instructions. When the instructions are run on a device, the chip is enabled to perform the method according to any one of the first aspect or the possible implementations of the first aspect or the method according to any one of the second aspect or the possible implementations of the second aspect.

According to a seventh aspect, a computer program product including instructions is provided. When the computer program product runs on a computer, the computer is enabled to perform the method according to any one of the first aspect or the possible implementations of the first aspect or the method according to any one of the second aspect or the possible implementations of the second aspect.

### BRIEF DESCRIPTION OF DRAWINGS

FIG. 1 is a functional block diagram of a vehicle according to an embodiment of this application;
FIG. 2 is a display diagram of a charging reminder interface according to an embodiment of this application;
FIG. 3 is a display diagram of another charging reminder interface according to an embodiment of this application;
FIG. 4(a) and FIG. 4(b) are a display diagram of another charging reminder interface according to an embodiment of this application;
FIG. 5(a) and FIG. 5(b) are a display diagram of another charging reminder interface according to an embodiment of this application;
FIG. 6 is a display diagram of another charging reminder interface according to an embodiment of this application;
FIG. 7(a) and FIG. 7(b) are a display diagram of another charging reminder interface according to an embodiment of this application;
FIG. 8 is a display diagram of another charging reminder interface according to an embodiment of this application;
FIG. 9 is a display diagram of another charging reminder interface according to an embodiment of this application;
FIG. 10 is a display diagram of another charging reminder interface according to an embodiment of this application;
FIG. 11 is a display diagram of another charging reminder interface according to an embodiment of this application;
FIG. 12 is a schematic flowchart of a charging reminding method 1200 according to an embodiment of this application;
FIG. 13 is a schematic flowchart of a charging reminding method 1300 according to an embodiment of this application;
FIG. 14 is a curve diagram of relationships between a discharge capacity and a voltage of a lithium-ion battery at different temperatures according to an embodiment of this application;
FIG. 15 is a schematic flowchart of another charging reminding method 1500 according to an embodiment of this application;
FIG. 16 is a schematic flowchart of another charging reminding method 1600 according to an embodiment of this application;
FIG. 17 is a schematic flowchart of another charging reminding method 1700 according to an embodiment of this application;
FIG. 18A and FIG. 18B are a schematic flowchart of another charging reminding method 1800 according to an embodiment of this application;
FIG. 19A and FIG. 19B are a schematic flowchart of another charging reminding method 1900 according to an embodiment of this application;
FIG. 20A to FIG. 20D are a schematic flowchart of another charging reminding method 2000 according to an embodiment of this application;
FIG. 21 is a schematic flowchart of a method 2100 for determining a temperature according to an embodiment of this application;
FIG. 22 is a schematic flowchart of a method 2200 for determining a habitual-charging battery level range of a user according to an embodiment of this application;
FIG. 23 is a block diagram of an apparatus 2300 for determining a habitual-charging battery level range of a user according to an embodiment of this application;
FIG. 24 is a schematic flowchart of a method 2400 for determining whether a vehicle is a home charging user according to an embodiment of this application;
FIG. 25 is a block diagram of an apparatus 2500 for determining whether a vehicle is a home charging user according to an embodiment of this application;
FIG. 26 is a schematic flowchart of an implementation method 2600 for sending a charging reminder notification according to an embodiment of this application; and
FIG. 27 is a block diagram of a charging reminding apparatus 2700 according to an embodiment of this application.

### DESCRIPTION OF EMBODIMENTS

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

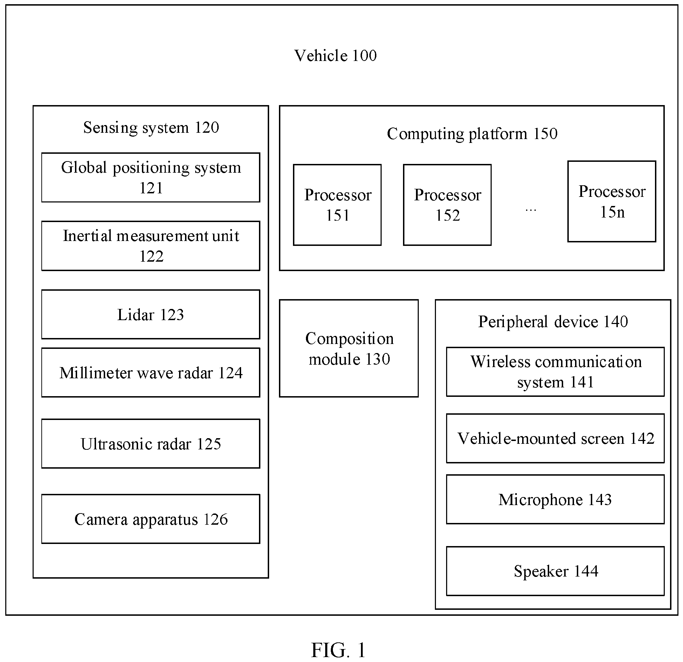

FIG. 1 is a functional block diagram of a vehicle 100 according to an embodiment of this application. As shown in FIG. 1, the vehicle 100 may include a sensing system 120, a composition module 130, a peripheral device 140, and a computing platform 150.

The sensing system 120 may include several types of sensors that sense information about an ambient environment of the vehicle 100. For example, the sensing system 120 may include a positioning system. The positioning system may be a global positioning system (global positioning system, GPS) 121, or may be one or more of a BeiDou system or another positioning system, an inertial measurement unit (inertial measurement unit, IMU) 122, a lidar 123, a millimeter wave radar 124, an ultrasonic radar 125, and a camera apparatus 126.

The vehicle 100 may include the composition module 130. The composition module 130 may draw a map for an environment by using technologies such as an object recognition algorithm, a structure from motion (structure from motion, SFM) algorithm, video tracking, and simultaneous localization and mapping (simultaneous localization and mapping, SLAM).

The vehicle 100 interacts with a mobile terminal, an external sensor, another vehicle, another computer system, or a user through the peripheral device 140. The peripheral device 140 may include a wireless communication system 141, a vehicle-mounted screen 142, a microphone 143, and/or a speaker 144.

In some possible implementations, the peripheral device 140 provides a means of interaction between a user of the vehicle 100 and a user interface 160. For example, the vehicle-mounted screen 142 may provide information for the user of the vehicle 100. The user interface 160 may further operate the vehicle-mounted screen 142 to receive an input from the user. The vehicle-mounted screen 142 may perform an operation through a touchscreen. In another case, the peripheral device 140 may provide a means for the vehicle 100 to communicate with another device located in the vehicle. For example, the microphone 143 may receive audio (for example, a voice command or another audio input) from the user of the vehicle 100. Similarly, the speaker 144 may output the audio to the user of the vehicle 100.

Some or all functions of the vehicle 100 may be controlled by the computing platform 150. The computing platform 150 may include processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit such as an FPGA implemented by an application-specific integrated circuit (application-specific integrated circuit, ASIC) or a programmable logic device (programmable logic device, PLD). In the reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory and execute the instructions, to implement a corresponding function.

Optionally, one or more of the foregoing components may be installed separately from or associated with the vehicle 100. The foregoing components may be communicatively coupled together in a wired and/or wireless manner.

Optionally, the foregoing components are merely examples. During actual application, components in the foregoing modules may be added or deleted according to an actual requirement. FIG. 1 should not be construed as a limitation on this embodiment of this application.

Optionally, the vehicle 100 may include one or more different types of transportation tools, or may include one or more different types of transportation tools or movable objects that are operated or moved on land (for example, a highway, a road, or a railway), on water (for example, a waterway, a river, or an ocean), or in space. For example, the vehicle may include an automobile, a bicycle, a motorcycle, a train, a subway, an airplane, a boat, an aircraft, a robot, another type of transportation tool, a movable object, or the like. This is not limited in this embodiment of this application.

With popularization of electric vehicles, charging a vehicle becomes a routine operation in daily life for users of the electric vehicles. Under this circumstance, the users of the electric vehicles have an increasingly strong demand for intelligent and reasonable charging reminders.

In an existing charging reminding solution, charging is reminded when a remaining battery level of a vehicle is less than a fixed value (for example, 10% of a full battery level) or it is determined, based on a distance of a traveling route, that the remaining battery level is insufficient to enable the vehicle to travel to a destination. However, in an actual case, a battery endurance distance of the vehicle is not fixed, but is affected by factors such as an environment, and charging habits of different users may be different.

In view of this, embodiments of this application provide a charging reminding method and apparatus, and a vehicle. According to the method, whether a user needs to charge a vehicle can be determined based on a charging habit of the user, an environment (for example, an ambient temperature), and the like; and when it is determined that charging is needed, the user is reminded to perform charging. This can meet a requirement of the user of the electric vehicle for an intelligent, personalized, and reasonable charging reminder, and improve user experience.

It should be understood that the solution in this application is applied to an intelligent charging scenario. For example, the solution may be applied to a charging reminding scenario of an electric vehicle, or may be applied to any electronic device equipped with a rechargeable battery, for example, a robot, a mobile phone, or a tablet.

It should be further understood that an example in which a charging object is a vehicle is used for description in embodiments of this application. However, this does not constitute a limitation on an application scenario of the solution in this application.

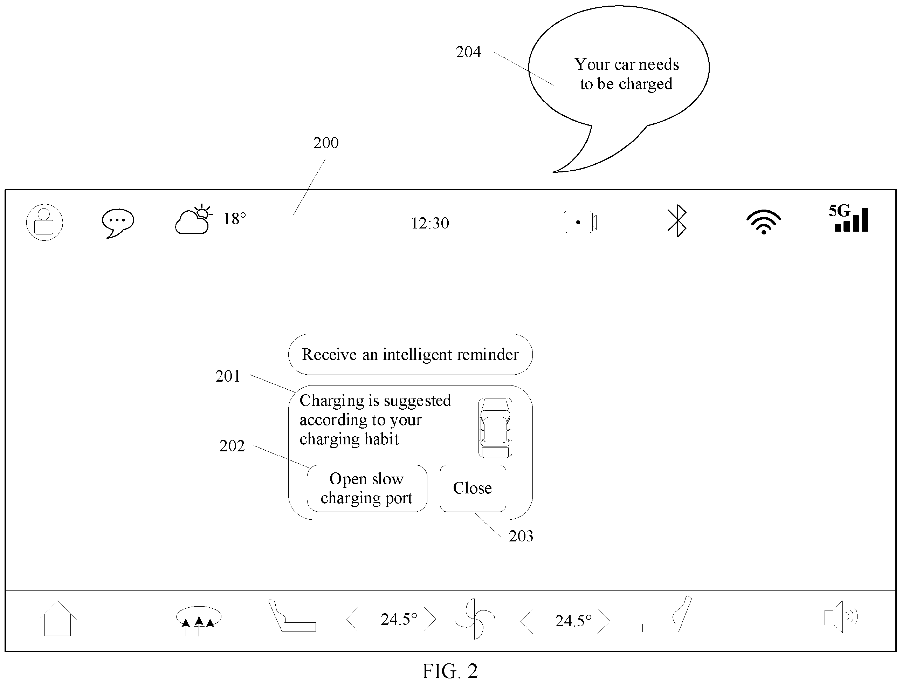

For example, with reference to FIG. 2 to FIG. 11, the following describes display diagrams of interfaces corresponding to a charging reminding method according to embodiments of this application.

For example, FIG. 2 is a display diagram of a charging reminder interface according to an embodiment of this application. The diagram of the interface may be, for example, applicable to a scenario in which a home charging user goes home and parks a vehicle.

When an electric vehicle driven by a user is a home charging user (or there is a charging station in a specific range away from a place at which the user goes home and parks the vehicle), and it is detected that the electric vehicle is in a parked state, whether the user needs to be reminded to perform charging is determined based on a current remaining battery level of the electric vehicle and a charging habit of the user. When it is determined that the user needs to be reminded to perform charging, the electric vehicle displays a charging reminder notification 201 (as shown in FIG. 2) on an in-vehicle infotainment display screen 200 of the electric vehicle.

Optionally, the charging reminder notification is associated with a control 202, and the control 202 is used by the user to open a charging port of the electric vehicle.

The charging port may be a slow charging port, or may be a fast charging port. A home charging user usually uses the slow charging port for charging, and a non-home charging user usually uses the fast charging port for charging.

Optionally, after the charging reminder notification 201 is displayed on the in-vehicle infotainment display screen 200 of the electric vehicle, the user may close the charging reminder notification 201 by tapping a control 203 associated with the charging reminder notification 201, may close the charging reminder notification 201 by tapping in a blank space of the in-vehicle infotainment display screen 200, may close the charging reminder notification 201 by pressing a shortcut button on a steering wheel, or may close the charging reminder notification 201 by giving a voice instruction. This is not limited in this application.

Optionally, when the charging reminder notification is displayed on the in-vehicle infotainment display screen of the electric vehicle, a charging reminder voice 204 is sent, and the charging reminder voice 204 may be, for example, "Your car needs to be charged", or "According to your charging habit, your car needs to be charged", or may be another charging reminder voice. This is not limited in this application.

Optionally, when it is detected that the electric vehicle is shifted to a P gear, it is determined that the electric vehicle is in the parked state.

A method for determining whether the electric vehicle is a home charging user is specifically described below.

Determining, based on the current remaining battery level of the electric vehicle and the charging habit of the user, whether the user needs to be reminded to perform charging may be as follows: determining a habitual-charging battery level range (a first battery level value, a second battery level value) of the user according to the charging habit of the user, where the second battery level value is greater than the first battery level value; and when it is determined that the current remaining battery level of the electric vehicle is less than or equal to the second battery level value, determining that the user needs to be reminded to perform charging, and further displaying the charging reminder notification on the in-vehicle infotainment display screen 200 of the electric vehicle.

It should be understood that, in all embodiments of this application, the battery level value represents an endurance distance (km) of the electric vehicle.

Optionally, the charging habit of the user includes a habitual-charging time interval of the user, a habitual-charging remaining battery level range of the user, a habitual-charging price interval of the user, and the like.

A method for determining the habitual-charging battery level range of the user according to the charging habit of the user is specifically described below.

It should be understood that a display form of the charging reminder notification 201 in this embodiment of this application is not limited. For example, the charging reminder notification 201 may be displayed in a pop-up window, may be displayed in full screen, may be displayed in a card form, may be dynamically displayed, or may be statically displayed. This is not limited in this application. In addition, text content of the charging reminder notification is not limited, and may be any notification content having a charging reminding function.

Optionally, a display position of the charging reminder notification 201 on the in-vehicle infotainment display screen 200 is not limited. For example, the charging reminder notification 201 may be displayed in full screen on the in-vehicle infotainment display screen 200, may be displayed in a large window on the in-vehicle infotainment display screen, or may be displayed in a small window in a blank space of the in-vehicle infotainment display screen.

Optionally, the charging reminder notification sent to the user may further include an ambient light reminder (an ambient light inside the vehicle, an ambient light outside the vehicle, a projection light, a pixel light, or the like), a seat vibration reminder, a fragrance system reminder, a band reminder, or the like. This is not limited in this application.

It should be understood that, in all embodiments of this application, an in-vehicle infotainment system may continuously update the habitual-charging battery level range of the user. For example, the habitual-charging battery level range of the user may be updated once at a regular interval (for example, once every Monday or once every half a month), may be updated once when a quantity of charging times reaches a value since a previous update, may be updated based on a user input, may be updated when it is identified that a charging habit of the user changes significantly, or may be updated in another possible manner. This is not limited in this application.

Optionally, when the habitual-charging battery level range of the user is lower than a recommended charging battery level value, a prompt notification is sent to the user.

The recommended charging battery level value may be determined based on performance of a battery used by the vehicle. When the user performs charging in a case in which the remaining battery level is the recommended charging battery level value, impact of an excessively low battery level on a service life and the performance of the battery can be avoided. The prompt notification sent to the user may be a notification (for example, "Your habitual-charging battery level range is relatively low, a low battery level is not conducive to battery health, and you are suggested to change your charging habit") displayed together with the charging reminder notification 201, may be a notification independently displayed on the in-vehicle infotainment display screen or a prompt voice (for example, "Your habitual-charging battery level range is relatively low, a low battery level is not conducive to battery health, and you are suggested to change your charging habit") sent to the user, or may be a sent prompt notification that is synchronized or not synchronized on another electronic device (for example, a mobile phone, a tablet, a band, a watch, or a XiaoAi speaker).

It should be understood that the foregoing solution of "sending a prompt notification to the user when the habitual-charging battery level range of the user is lower than a recommended charging battery level value" can be combined with all the embodiments provided in this application.

Different users have different psychological safety threshold ranges for a remaining battery level of the electric vehicle. In this embodiment of this application, whether the electric vehicle driven by the user needs to be charged can be determined according to the charging habit of the user; and when it is determined that the electric vehicle needs to be charged, the user is reminded to perform charging. This can effectively avoid an anxiety emotion generated by the user because the remaining battery level of the electric vehicle is lower than the psychological safety threshold range of the user, thereby improving user experience.

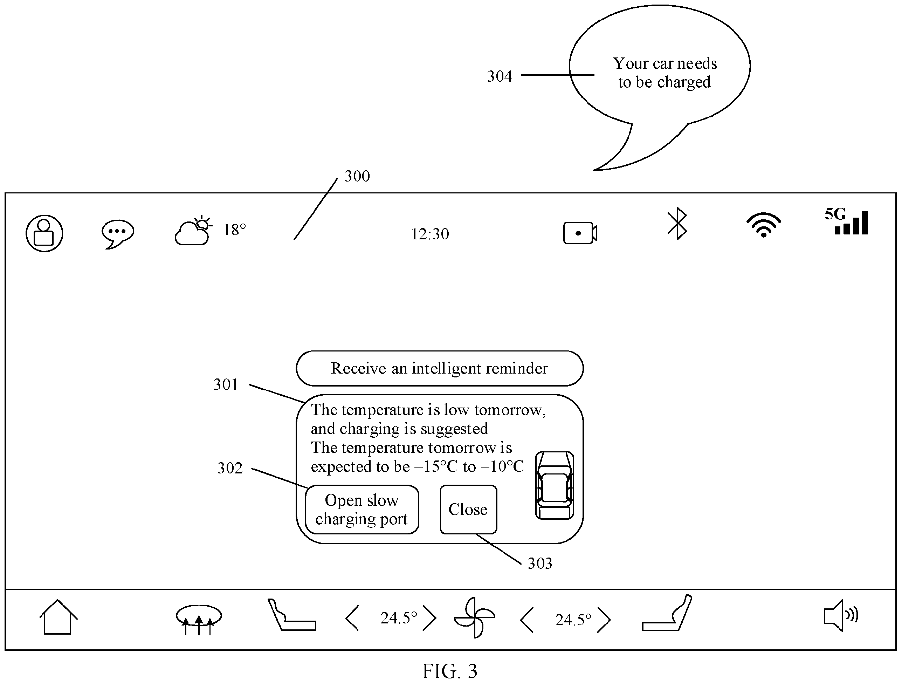

For example, FIG. 3 is a display diagram of another charging reminder interface according to an embodiment of this application. The diagram of the interface may be, for example, applicable to a scenario in which a home charging user goes home and parks a vehicle.

When an electric vehicle driven by a user is a home charging user (or there is a charging station in a specific range away from a place at which the user goes home and parks the vehicle), and it is detected that the electric vehicle is in a parked state, whether the user needs to be reminded to perform charging is determined based on a current remaining battery level of the electric vehicle and a local next-day temperature. When it is determined that the user needs to be reminded to perform charging, the electric vehicle displays a charging reminder notification 301 (as shown in FIG. 3) on an in-vehicle infotainment display screen 300 of the electric vehicle.

Optionally, the charging reminder notification is associated with a control 302, and the control 302 is used by the user to open a charging port of the electric vehicle.

The charging port may be a slow charging port, or may be a fast charging port. A home charging user usually uses the slow charging port for charging, and a non-home charging user usually uses the fast charging port for charging.

Optionally, after the charging reminder notification 301 is displayed on the in-vehicle infotainment display screen 300 of the electric vehicle, the user may close the charging reminder notification 301 by tapping a control 303 associated with the charging reminder notification 301, may close the charging reminder notification 301 by tapping in a blank space of the in-vehicle infotainment display screen 300, may close the charging reminder notification 301 by pressing a shortcut button on a steering wheel, or may close the charging reminder notification 301 by giving a voice instruction. This is not limited in this application.

Optionally, when the charging reminder notification 301 is displayed on the in-vehicle infotainment display screen 300 of the electric vehicle, a charging reminder voice 304 is sent, and the charging reminder voice 304 may be, for example, "Your car needs to be charged", may be "The temperature is low tomorrow, and you are suggested to charge your car in advance", or may be another charging reminder voice. This is not limited in this application.

Optionally, when it is detected that the electric vehicle is shifted to a P gear, it is determined that the electric vehicle is in the parked state.

A method for determining whether the electric vehicle is a home charging user is specifically described below.

Determining, based on the current remaining battery level of the electric vehicle and the local next-day temperature, whether the user needs to be reminded to perform charging may be as follows: first determining a third battery level value of the electric vehicle; and when it is determined that the local next-day temperature is within an extreme-cold range or an extreme-hot range, and the current remaining battery level of the electric vehicle is less than or equal to the third battery level value, determining that the user needs to be reminded to perform charging, and further displaying the charging reminder notification 301 on the in-vehicle infotainment display screen 300 of the electric vehicle.

Optionally, the third battery level value of the electric vehicle may be 200 km.

Optionally, the third battery level value of the electric vehicle may be determined based on a habitual-charging battery level range (a first battery level value, a second battery level value) of the user, for example, may be the second battery level value + 50 km.

Extreme-cold ranges or extreme-hot ranges corresponding to different areas may vary, and determining of the extreme-cold range or the extreme-hot range is related to a battery model. For example, the extreme-cold range may be that a temperature is lower than or equal to -10°C, and the extreme-hot range may be that a temperature is higher than 40°C.

A method for determining the habitual-charging battery level range of the user according to the charging habit of the user is specifically described below.

It should be understood that a display form of the charging reminder notification 301 in this embodiment of this application is not limited. For example, the charging reminder notification 301 may be displayed in a pop-up window, may be displayed in full screen, may be displayed in a card form, may be dynamically displayed, or may be statically displayed. This is not limited in this application. In addition, text content of the charging reminder notification 301 is not limited, and may be any notification content having a charging reminding function.

Optionally, a display position of the charging reminder notification 301 on the in-vehicle infotainment display screen 300 is not limited. For example, the charging reminder notification 301 may be displayed in full screen on the in-vehicle infotainment display screen 300, may be displayed in a large window on the in-vehicle infotainment display screen 300, or may be displayed in a small window in a blank space of the in-vehicle infotainment display screen 300.

Optionally, the charging reminder notification sent to the user may further include an ambient light reminder (an ambient light inside the vehicle, an ambient light outside the vehicle, a projection light, a pixel light, or the like), a seat vibration reminder, a fragrance system reminder, a band reminder, or the like. This is not limited in this application.

A temperature has relatively great impact on an endurance distance of a battery of the electric vehicle. In this embodiment of this application, whether the electric vehicle driven by the user needs to be charged in advance can be determined based on the next-day temperature; and when it is determined that the electric vehicle needs to be charged, the user is reminded to perform charging. This can effectively avoid a case that a current use requirement of the user cannot be met because the remaining battery level of the electric vehicle is reduced due to a sudden temperature change, thereby improving user experience.

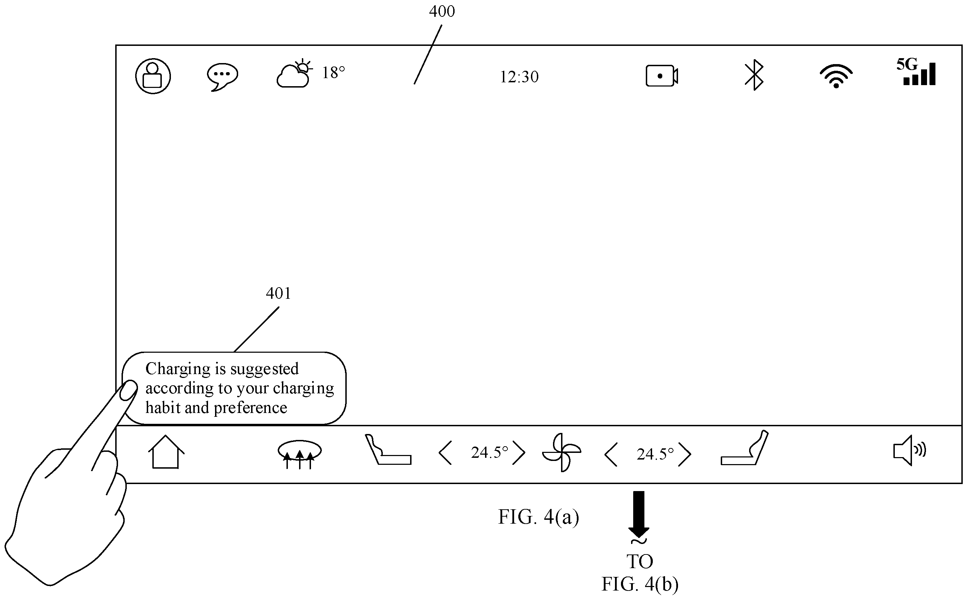

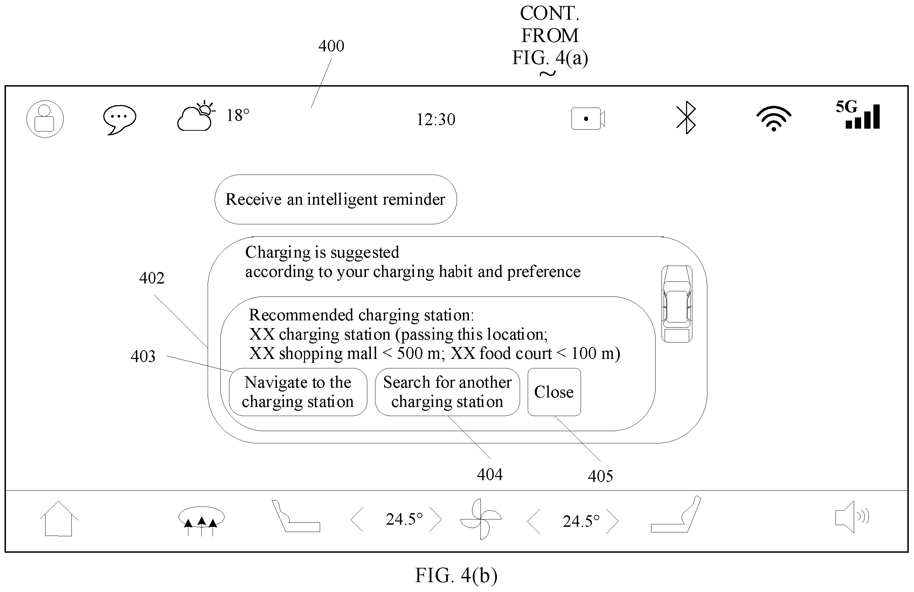

For example, FIG. 4(a) and FIG. 4(b) are a display diagram of another charging reminder interface according to an embodiment of this application. The diagram of the interface may be, for example, applicable to a scenario in which an electric vehicle is traveling.

When an electric vehicle driven by a user is in a traveling state, whether the user needs to be reminded to perform charging is determined based on a current remaining battery level (for example, which may be periodically determined) of the electric vehicle, and a charging habit of the user, and/or a local next-day temperature; and when it is determined that the user needs to be reminded to perform charging, the electric vehicle displays a charging reminder notification 401 (as shown in FIG. 4(a)) on an in-vehicle infotainment display screen 400 of the electric vehicle.

Optionally, when the vehicle is traveling, for traveling safety purposes, the charging reminder notification 401 is displayed in a form of a suggestion card (for example, a Celia suggestion form) in a blank space in a lower area of the in-vehicle infotainment display screen 400.

Optionally, a navigation control may be displayed in the suggestion card, and the user may directly navigate to a recommended charging station by using the navigation control.

Optionally, the user may further swipe up the suggestion card (the charging reminder notification 401). When the user swipes up the charging reminder notification 401, the charging reminder notification 401 is converted into a charging reminder notification 402 (as shown in FIG. 4(b)).

Optionally, the charging reminder notification 402 includes a list of recommended charging stations. Each charging station in the list of the recommended charging stations corresponds to one prompt tag. The prompt tag is used to prompt the user with entertainment information related to the corresponding charging station. The user may select a target charging station based on the entertainment information.

Optionally, the entertainment information includes information about a shopping mall near the charging station, information about a catering place, information about a library address, information about a cinema, information about a playground, and the like.

Optionally, the charging reminder notification 402 is associated with a control 403, and the control 403 is used by the user to navigate to the target charging station.

Optionally, the charging reminder notification 402 is associated with a control 404, and the control 404 is used by the user to search for another charging station.

The another charging station may be a charging station within a specific range nearby, may be a charging station that the user passes by, may be a charging station frequently used by the user, or the like.

Optionally, after the user arrives at the target charging station, a control for opening a charging port is automatically popped up on the in-vehicle infotainment display screen. The user may open the charging port by tapping the control, or may open the charging port by giving a voice instruction. The charging port may be a slow charging port, or may be a fast charging port. A home charging user usually uses the slow charging port for charging, and a non-home charging user usually uses the fast charging port for charging.

Optionally, after the charging reminder notification 402 is displayed on the in-vehicle infotainment display screen 400 of the electric vehicle, the user may close the charging reminder notification 402 by tapping a control 405 associated with the charging reminder notification 402, may close the charging reminder notification 403 by tapping in a blank space of the in-vehicle infotainment display screen 400, may close the charging reminder notification 402 by pressing a shortcut button on a steering wheel, or may close the charging reminder notification 402 by giving a voice instruction. This is not limited in this application.

Optionally, when the electric vehicle is a home charging user, during traveling of the vehicle, in a case in which it is determined that the remaining battery level is sufficient to reach a destination, charging is not reminded. A method for determining whether the electric vehicle is a home charging user is specifically described below.

Whether the user needs to be reminded to perform charging is determined based on the current remaining battery level of the electric vehicle, and the charging habit of the user/the local next-day temperature. This is described in the embodiments shown in FIG. 2 and FIG. 3. For brevity, details are not described herein again.

It should be understood that a display form of the charging reminder notification 402 in this embodiment of this application is not limited. For example, the charging reminder notification 402 may be displayed in a pop-up window, may be displayed in full screen, may be displayed in a card form, may be dynamically displayed, or may be statically displayed. This is not limited in this application. In addition, text content of the charging reminder notification 402 is not limited, and may be any notification content having a charging reminding function.

Optionally, a display position of the charging reminder notification 402 on the in-vehicle infotainment display screen 400 is not limited. For example, the charging reminder notification 402 may be displayed in full screen on the in-vehicle infotainment display screen 400, may be displayed in a large window on the in-vehicle infotainment display screen 400, or may be displayed in a small window in a blank space of the in-vehicle infotainment display screen 400.

Optionally, this embodiment of this application is applicable to a scenario in which the current remaining battery level of the electric vehicle is within a habitual-charging battery level range (a first battery level value < the current remaining battery level of the electric vehicle ≤ a second battery level value) of the user.

In this embodiment of this application, during traveling of the vehicle, whether the electric vehicle driven by the user needs to be charged can be determined according to the charging habit of the user; and when it is determined that the electric vehicle needs to be charged, the user is reminded to perform charging. This can effectively avoid an anxiety emotion generated by the user because the remaining battery level of the electric vehicle is lower than the psychological safety threshold range of the user, thereby improving user experience. In addition, whether the electric vehicle driven by the user needs to be charged can be determined based on the next-day temperature; and when it is determined that the electric vehicle needs to be charged, the user is reminded to perform charging. This can effectively avoid a case that a current use requirement of the user cannot be met because the remaining battery level of the electric vehicle is reduced due to a sudden temperature change. In addition, during traveling of the vehicle, a charging reminder notification is statically displayed in a small window in a blank space of the in-vehicle infotainment display screen, and there is no voice reminder, so that safe traveling of the vehicle is not affected. Moreover, the charging reminder notification includes a recommended charging station, and further displays entertainment information corresponding to the charging station, so that the user can select a more appropriate charging station, thereby further improving user experience.

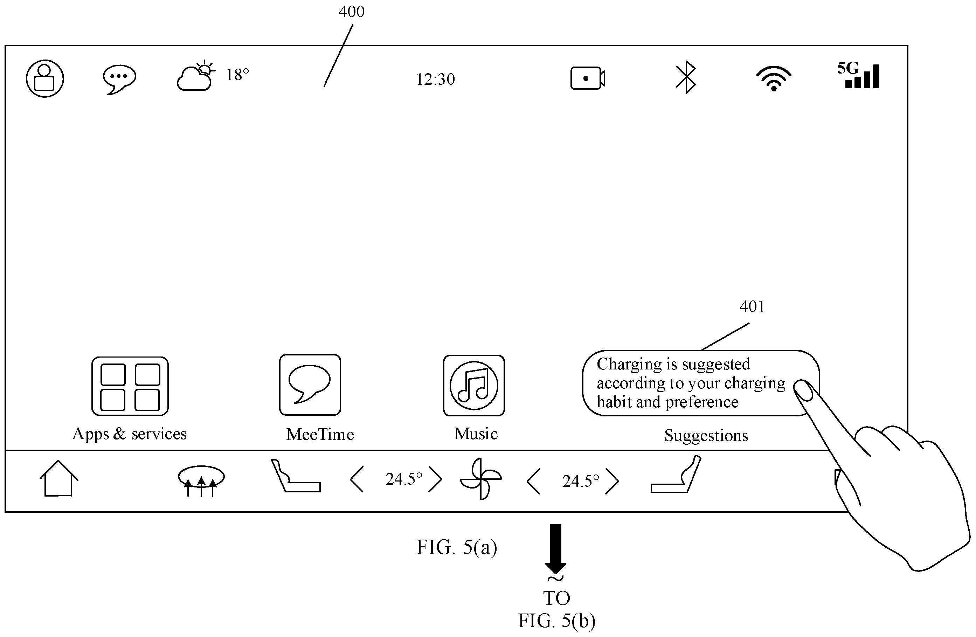

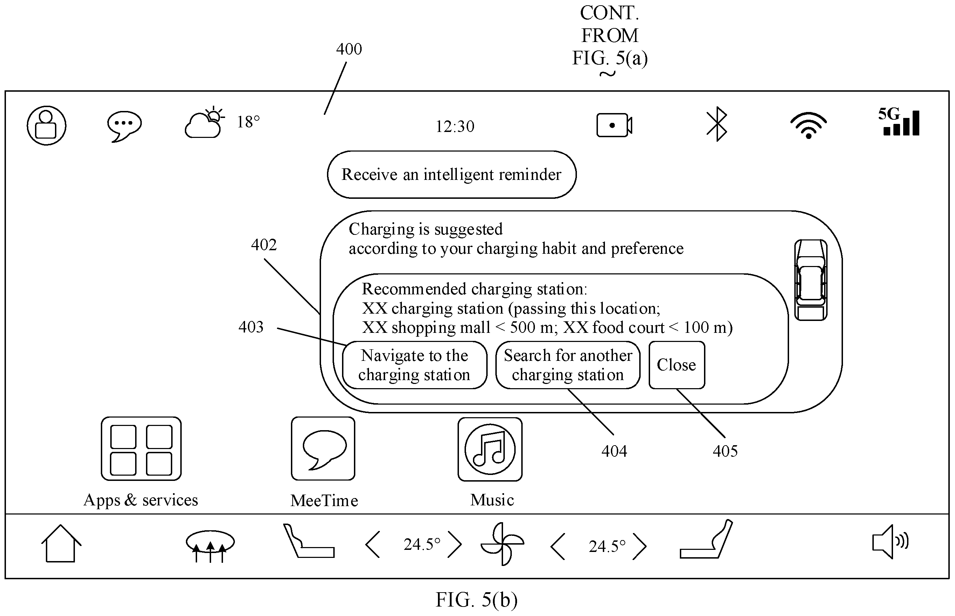

For example, FIG. 5(a) and FIG. 5(b) are a display diagram of another charging reminder interface according to an embodiment of this application. The diagram of the interface may be, for example, applicable to a scenario in which an electric vehicle is traveling.

This embodiment of this application is similar to the embodiment shown in FIG. 4(a) and FIG. 4(b), and a difference lies in that a display form of a charging reminder notification 401 is different. Specifically, in this embodiment of this application, the charging reminder notification 401 is displayed together with other service cards in a lower quarter area of an in-vehicle infotainment display screen (for example, which may be a Celia suggestion card displayed in a SMART DOCK area).

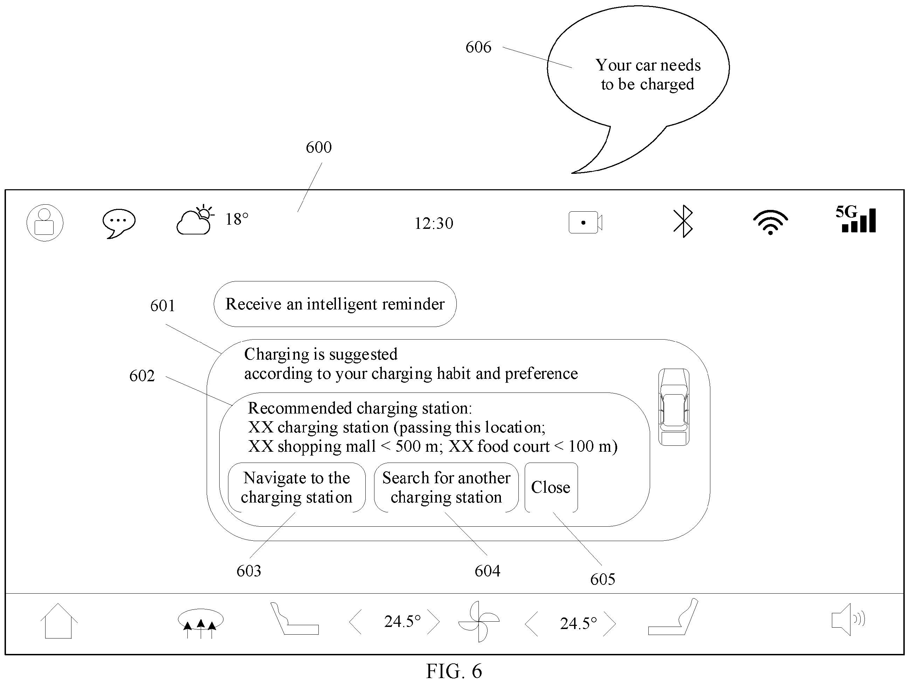

For example, FIG. 6 is a display diagram of another charging reminder interface according to an embodiment of this application. The diagram of the interface may be, for example, applicable to a scenario in which an electric vehicle is traveling.

A difference between the embodiment shown in FIG. 6 and the embodiment shown in FIG. 4(a) and FIG. 4(b) is as follows:
(1) In the embodiment shown in FIG. 6, when it is determined that the user needs to be reminded to perform charging, a charging reminder notification 601 is directly displayed on an in-vehicle infotainment display screen 600. An explanation of the charging reminder notification 601 is the same as the explanation of the charging reminder notification 402 in the embodiment shown in **FIG.** 4(a) and FIG. 4(b) (functions of a control 603, a control 604, and a control 605 are respectively the same as the functions of the control 403, the control 404, and the control 405).
(2) In the embodiment shown in FIG. 6, when the charging reminder notification 601 is displayed, a charging reminder voice 606 is sent. An explanation of the charging reminder voice 606 is the same as the explanation of the charging reminder voice in FIG. 2 and FIG. 3.

Optionally, this embodiment of this application is applicable to a scenario in which a current remaining battery level of an electric vehicle is less than or equal to a habitual-charging battery level range (the current remaining battery level of the electric vehicle ≤ a first battery level value) of the user.

In this embodiment of this application, during traveling of the vehicle, when it is determined that the current remaining battery level is lower than the habitual-charging battery level range of the user, to avoid a case in which the battery level is insufficient to reach a destination due to not charging in a timely manner, the user is strongly reminded (that is, a charging reminder notification and a charging reminder voice displayed in a pop-up window). In addition, the charging reminder notification includes a recommended charging station, and further displays entertainment information corresponding to the charging station, so that the user can select a more appropriate charging station, thereby further improving user experience.

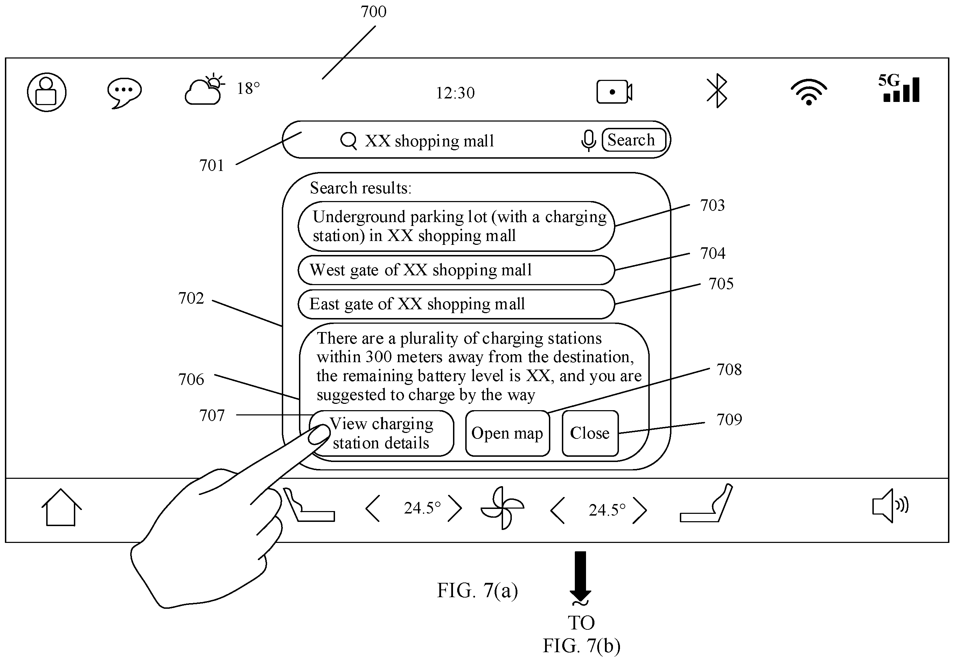

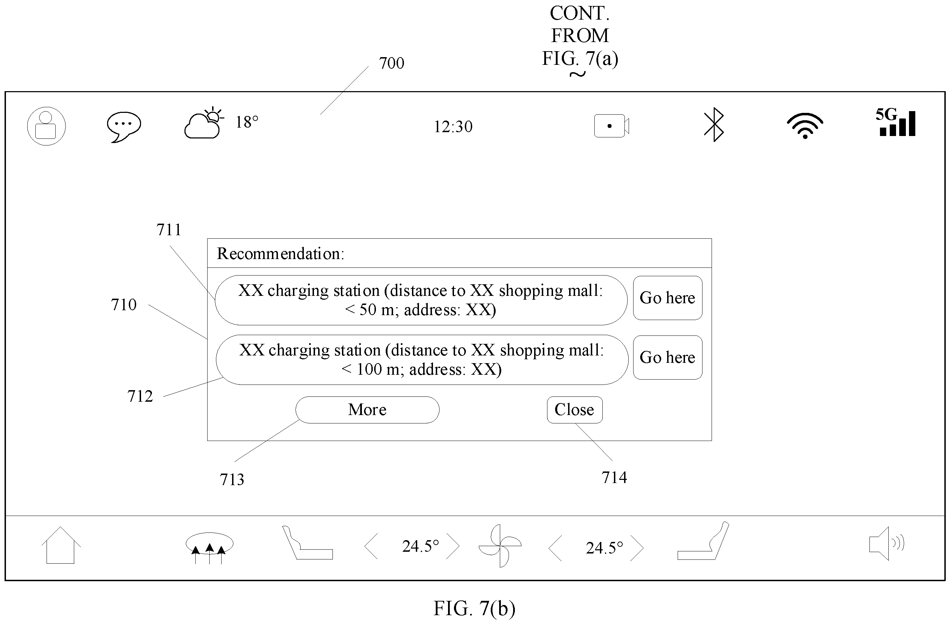

For example, FIG. 7(a) and FIG. 7(b) are a display diagram of another charging reminder interface according to an embodiment of this application. The diagram of the interface may be, for example, applicable to a scenario in which a user is about to drive an electric vehicle to go out.

For example, a travel destination of the user is an XX shopping mall. As shown in FIG. 7(a), when the user searches for the XX shopping mall in a search box 701 on a navigation page, a search result box 702 is displayed on an in-vehicle infotainment display screen 700.

The user may search for the XX shopping mall by tapping a search control, by giving a voice instruction, or in another manner. This is not limited in this application.

The search result box 702 includes a search result 703, a search result 704, and a search result 705.

Optionally, if there is a charging station at an address corresponding to a search result displayed in the search result box 602, the search result prompts that there is a charging station at the address.

Optionally, when it is determined, based on a remaining battery level of an electric vehicle and/or a charging habit of the user and/or a temperature, that charging can be performed by the way when the destination is reached, the search result box 702 further includes a prompt box 706. The prompt box 706 is used to prompt the user that there is a charging station in a specific range near the destination, and advise the user to perform charging by the way near the destination.

Determining, based on the remaining battery level of the electric vehicle, that charging may be performed by the way when the destination is reached may be, for example, as follows: when the destination is reached, predicating that the remaining battery level is within a habitual-charging battery level range of the user, is lower than a habitual-charging battery level range of the user, or is in a specific range higher than a habitual-charging battery level range of the user. For example, the high specific range may be 0 km to 10 km, may be 0 km to 50 km, or may be another range. This is not limited in this application.

The prompt box 706 is associated with a control 707, a control 708, and a control 709. The user may view a list of charging stations near the destination by tapping the control 707, the user may open a map by tapping the control 708 to further view specific locations of charging stations near the destination more intuitively, and the user may close the prompt by tapping the control 709.

After the user triggers a function of viewing the list of the charging stations near the destination (for example, tapping the control 707), an interface shown in FIG. 7(b) is displayed on the in-vehicle infotainment display screen 700. It can be learned from FIG. 7(b) that a charging station list box 710 is displayed on the in-vehicle infotainment display screen 700. The charging station list box 710 displays a list of charging stations near the destination, and the list of the charging stations includes a charging station 711 and a charging station 712. In addition, each charging station corresponds to one navigation control (for example, "Go here" shown in FIG. 7(b)).

Optionally, a charging station in the list of the charging stations may be a recommended charging station screened by a system from the list of the charging stations near the destination. For example, the recommended charging station may be comprehensively determined by the system with reference to a situation such as a shopping mall, a supermarket, and a catering around the destination, may be a charging station frequently used by the user, or may be recommended with reference to a charging preference of the user.

The charging preference of the user may include a preferred charging time interval of the user and a preferred charging price interval of the user, and may further include another charging preference of the user. This is not limited in this application.

Optionally, the charging station list box 710 is further associated with a control 713 and a control 714. If a charging station in a currently displayed list of charging stations does not meet a requirement of the user, the user may tap the control 713 to view more charging station details. In addition, if the user does not want to perform charging at the destination, the user may further tap the control 714 to close a current charging reminder interface.

It should be understood that this embodiment of this application is merely an example for description. Functions corresponding to the control 707, the control 708, the control 709, the control 713, and the control 714 are not limited to being triggered by using a control, and may alternatively be triggered by using a voice, or may be triggered by using a specific button on a steering wheel, or may be triggered in another manner. This is not limited in this application.

It should be understood that this embodiment of this application is merely an example for description. Any solution for determining, according to a situation of a charging station near a destination and a remaining battery level of a vehicle or a charging habit of a user or a temperature, whether the user needs to be reminded to perform charging when navigation is performed to a destination, and for reminding the user when it is determined that the user needs to be reminded falls within the scope disclosed in this embodiment of this application.

In this embodiment of this application, when it is identified that the user navigates to a destination, and the user is likely to stay at the destination for a relatively long period of time, an in-vehicle infotainment system determines, with reference to the remaining battery level of the vehicle, the charging habit of the user, and/or the like, whether the user needs to be reminded to perform charging by the way near the destination; and when it is determined that charging is suggested near the destination, a charging reminder notification is sent to the user, and a recommended charging station near the destination is prompted together to the user, so that the user can directly navigate to the target charging station. In this way, the user can perform charging by the way in a time period during which the user stays at the destination, which does not delay a trip plan of the user, and can also ensure that the vehicle has a sufficient battery level. The user does not need to perform charging specifically, thereby further improving user experience.

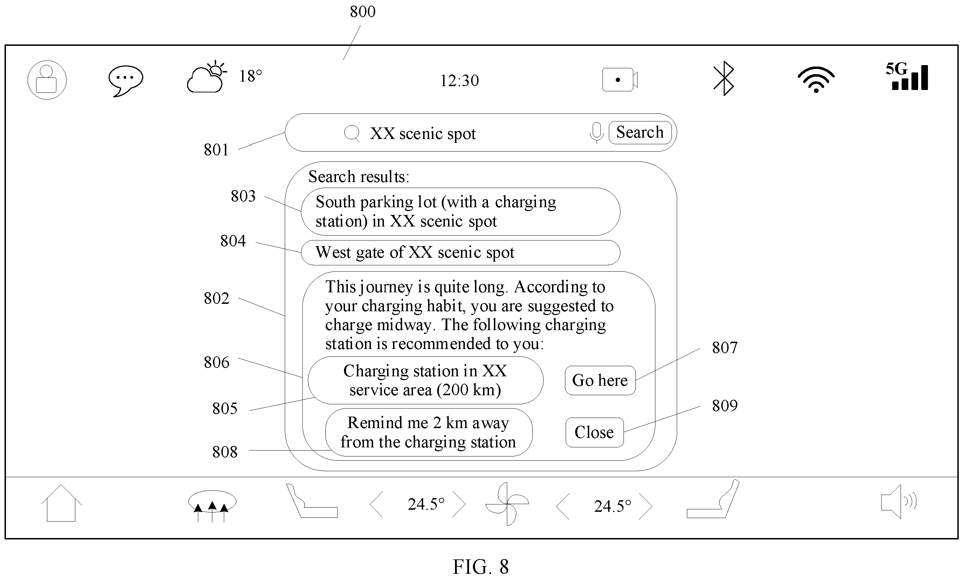

For example, FIG. 8 is a display diagram of another charging reminder interface according to an embodiment of this application. The diagram of the interface may be, for example, applicable to a scenario in which a user is about to drive an electric vehicle to go out.

For example, a travel destination of the user is an XX scenic spot. As shown in FIG. 8, when the user searches for the XX scenic spot in a search box 801 on a navigation page, a search result box 802 is displayed on an in-vehicle infotainment display screen 800.

The user may search for the XX scenic spot by tapping a search control, by giving a voice instruction, or in another manner. This is not limited in this application.

The search result box 802 includes a search result 803 and a search result 804.

Optionally, if there is a charging station at an address corresponding to a search result displayed in the search result box 802, the search result prompts that there is a charging station at the address.

Optionally, when it is determined, based on a remaining battery level of the electric vehicle and/or a charging habit of the user, that a current battery level is insufficient to reach the destination, or the remaining battery level is lower than a habitual-charging battery level range of the user when the destination is reached, the search result box 802 further includes a prompt box 805. The prompt box 805 is used to prompt and advise the user to perform charging midway, and also displays a midway charging station (for example, a recommended charging station 805 in FIG. 8) recommended by a system. The recommended charging station 805 corresponds to a navigation control 807, and the user may tap the navigation control 807 to enter a page for navigating to the recommended charging station. In addition, the user may further tap a control 808 to book a reminder service (for example, reminded 2 km away from the recommended charging station), and the user may further tap a control 809 to close the prompt box 805.

It should be understood that this embodiment of this application is merely an example for description. Functions corresponding to the control 803, the control 804, the control 807, the control 808, and the control 809 are not limited to being triggered by using a control, and may alternatively be triggered by using a voice, or may be triggered by using a specific button on a steering wheel, or may be triggered in another manner. This is not limited in this application.

It should be understood that this embodiment of this application is merely an example for description. Any solution for determining, based on an estimated traveling distance, a current remaining battery level, and/or a charging habit of a user, whether the user needs to be reminded to perform charging midway when navigation is performed to a destination, and for reminding the user when it is determined that the user needs to be reminded falls within the scope disclosed in this embodiment of this application.

In this embodiment of this application, when it is identified that the user navigates to a destination, and it is determined, based on the estimated traveling distance, the remaining battery level of the vehicle, and/or the charging habit of the user, that the vehicle needs to be charged midway, a midway charging reminder notification is sent to the user, and a midway charging station recommended by the system is also displayed, so that the user directly navigates to the target charging station or is reminded when the user is about to arrive at the charging station. In this way, the user can make a detailed journey plan before departure, avoiding inconvenience caused to the user's journey due to temporary determining that charging is needed, and further improving user experience.

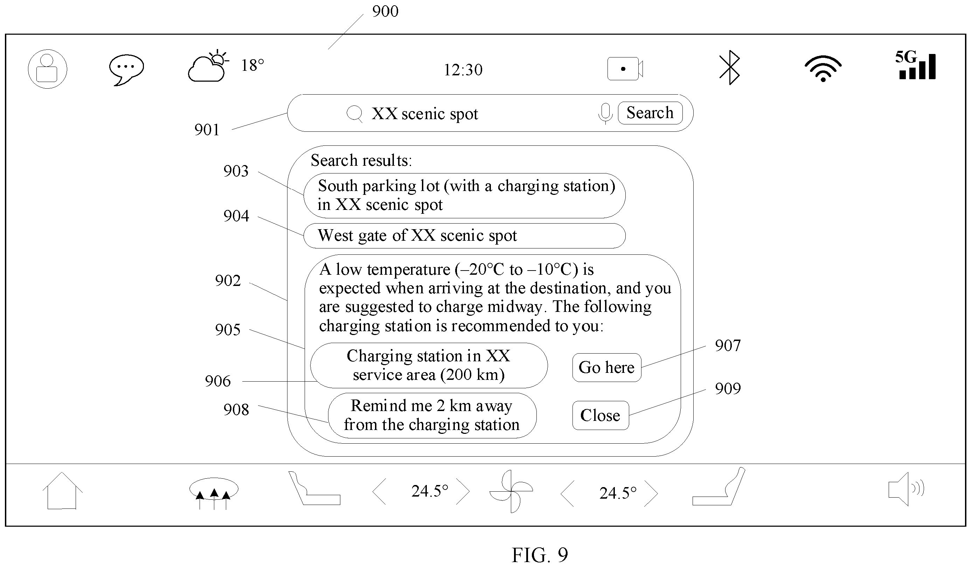

For example, FIG. 9 is a display diagram of another charging reminder interface according to an embodiment of this application. The diagram of the interface may be, for example, applicable to a scenario in which a user is about to drive an electric vehicle to go out.

For example, a travel destination of the user is an XX scenic spot. As shown in FIG. 9, when the user searches for the XX scenic spot in a search box 901 on a navigation page, a search result box 902 is displayed on an in-vehicle infotainment display screen 900.

The user may search for the XX scenic spot by tapping a search control, by giving a voice instruction, or in another manner. This is not limited in this application.

The search result box 902 includes a search result 903 and a search result 904.

Optionally, if there is a charging station at an address corresponding to a search result displayed in the search result box 902, the search result prompts that there is a charging station at the address.

Optionally, when it is determined, based on a remaining battery level of the electric vehicle, a temperature, and/or a charging habit of the user, that a current battery level is insufficient to reach the destination, or the remaining battery level is lower than a habitual-charging battery level range of the user when the destination is reached, the search result box 902 further includes a prompt box 905. The prompt box 905 is used to prompt and advise the user to perform charging midway, and also displays a midway charging station (for example, a recommended charging station 905 in FIG. 9) recommended by a system. The recommended charging station 905 corresponds to a navigation control 907, and the user may tap the navigation control 907 to enter a page for navigating to the recommended charging station. In addition, the user may further tap a control 908 to book a reminder service (for example, reminded 2 km away from the recommended charging station), and the user may further tap a control 909 to close the prompt box 905.

It should be understood that this embodiment of this application is merely an example for description. Functions corresponding to the control 903, the control 904, the control 907, the control 908, and the control 909 are not limited to being triggered by using a control, and may alternatively be triggered by using a voice, or may be triggered by using a specific button on a steering wheel, or may be triggered in another manner. This is not limited in this application.

It should be understood that this embodiment of this application is merely an example for description. Any solution for determining, based on an estimated traveling distance, a temperature, a current remaining battery level, and/or a charging habit of a user, whether the user needs to be reminded to perform charging midway when navigation is performed to a destination, and for reminding the user when it is determined that the user needs to be reminded falls within the scope disclosed in this embodiment of this application.

In this embodiment of this application, when it is identified that the user navigates to a destination, and it is determined, based on the estimated traveling distance, the remaining battery level of the vehicle, the temperature, and/or the charging habit of the user, that the vehicle needs to be charged midway, a midway charging reminder notification is sent to the user, and a midway charging station recommended by the system is also displayed, so that the user directly navigates to the target charging station or is reminded when the user is about to arrive at the charging station. In this way, the user can make a detailed journey plan before departure, avoiding inconvenience caused to the user's journey due to temporary determining that charging is needed, and further improving user experience.

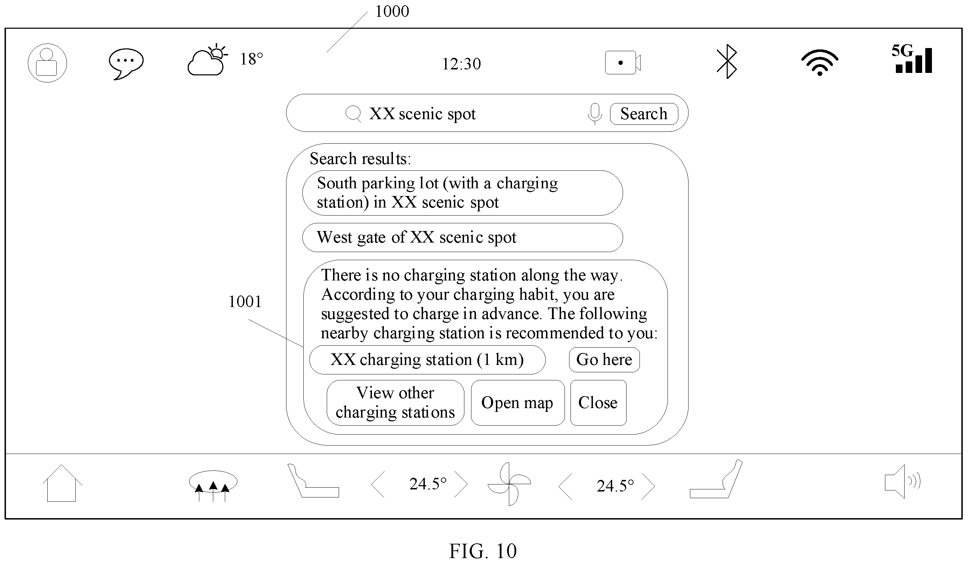

For example, FIG. 10 is a display diagram of another charging reminder interface according to an embodiment of this application. The diagram of the interface is applicable to a scenario in which a user is about to drive an electric vehicle to go out.

This embodiment of this application is similar to the embodiments shown in FIG. 8 and FIG. 9, and a difference between this embodiment of this application and the embodiments shown in FIG. 8 and FIG. 9 is as follows:

In the embodiments shown in FIG. 8 and FIG. 9, it is detected that there are charging stations along a navigation route, and the recommended midway charging station is also displayed in the charging reminder notification. However, in this embodiment of this application, when it is detected that there is no charging station along a navigation route, and it is determined, based on a remaining battery level and a charging habit of a user and/or a temperature, that a current battery level is insufficient to travel to a destination, or the remaining battery level is lower than a habitual-charging battery level range of the user when the destination is reached, a charging reminder notification 1001 is sent before the user departs, and the user is also notified that there is no charging station along the route, and the user is advised to perform charging before departure.

In this embodiment of this application, before departure, if a system determines, based on the current remaining battery level and the charging habit of the user and/or the temperature, that the current battery level is insufficient to travel to the destination, or that the remaining battery level is lower than the habitual-charging battery level range of the user when the destination is reached, the charging reminder notification is sent to the user. This can avoid a case in which a journey plan fails due to an insufficient battery level of the vehicle because there is no available charging station midway, and can also effectively alleviate charging anxiety of the user due to the battery level being lower than the habitual-charging battery level range.

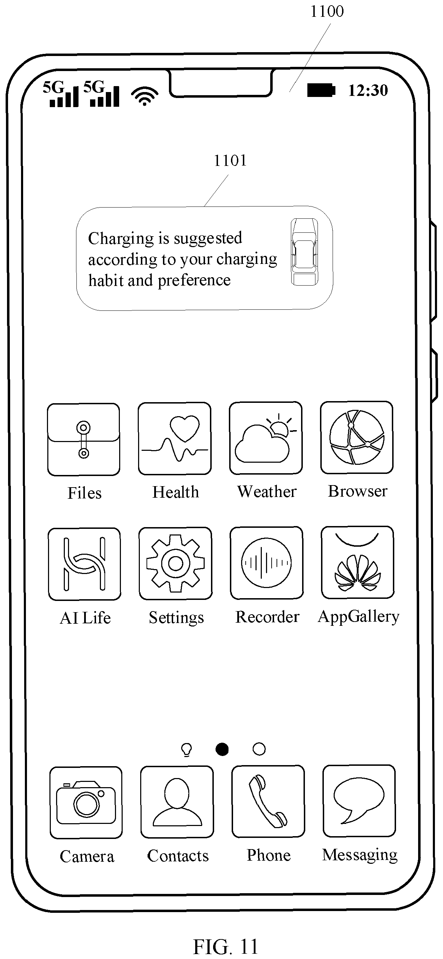

For example, FIG. 11 is a display diagram of another charging reminder interface according to an embodiment of this application.

In an example, when a charging reminder notification is displayed on an in-vehicle infotainment display screen, the charging reminder notification is synchronously displayed on an electronic device (for example, a mobile phone, a tablet, a band, or a watch) that has a binding relationship with an in-vehicle infotainment system.

In an example, when an electric vehicle is in a non-traveling state and a user is not in the vehicle, and when it is detected that a remaining battery level of the vehicle is within a habitual-charging range of the user, or it is detected that a remaining battery level of the vehicle is lower than or equal to a habitual-charging range of the user, or it is detected that a local next-day temperature is lower than a first threshold or higher than a second threshold, and a current remaining battery level is less than a third battery level value, a charging reminder notification is synchronously displayed on an electronic device that has a binding relationship with an in-vehicle infotainment system.

The charging reminder notification synchronously displayed on the electronic device that has a binding relationship with the in-vehicle infotainment system may be a charging reminder notification 1101 shown in FIG. 11, or may be a reminder notification in another form. A specific explanation is described in detail in the embodiments shown in FIG. 2 to FIG. 10. For brevity, details are not described herein again.

Optionally, the synchronously displayed charging reminder notification may be in a form of a service card. When the user taps the notification, a control interface of a charging reminder is displayed on a display screen of an electronic device 1100. The interface is associated with one or more controls. The one or more controls may be, for example, a navigation control, a close control, a control for viewing a charging station, or a control for viewing a remaining battery level of a vehicle. This is not limited in this application.

Optionally, the electronic device that has a binding relationship with the in-vehicle infotainment system may alternatively be an electronic device without a screen, for example, a XiaoAi speaker (which may send a charging reminder notification in a voice manner) or a projection device. This is not limited in this application.

In this embodiment of this application, when the charging reminder notification is displayed on the in-vehicle infotainment display screen of the vehicle, the associated electronic device of the user synchronously displays the notification, so that the user can learn of the charging reminder notification in a timely manner. In addition, when the user is not in the vehicle (for example, the vehicle is parked for a long period of time and is not in use), and when it is detected that charging is needed, the associated electronic device of the user reminds the user that charging is needed. This can avoid inconvenience caused by an insufficient battery level when the vehicle is in use, and further improve user experience.

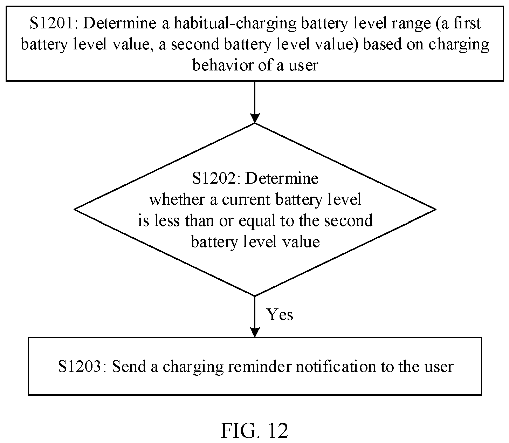

The following describes, with reference to FIG. 12 to FIG. 20A to FIG. 20D, a charging reminding method according to embodiments of this application.

For example, FIG. 12 is a schematic flowchart of a charging reminding method 1200 according to an embodiment of this application. As shown in FIG. 12, the method 1200 includes the following steps.

S1201: Determine a habitual-charging battery level range (a first battery level value, a second battery level value) of a user based on charging behavior of the user.

The first battery level value is a minimum battery level value in the habitual-charging battery level range of the user, the second battery level value is a maximum battery level value in the habitual-charging battery level range of the user, and the first battery level value is less than or equal to the second battery level value.

Optionally, the charging behavior of the user includes a remaining battery level that is of a vehicle and that corresponds to charging behavior of the user in a continuous time period, and may further include a charging time of the user, a charging price, a charging place, or the like in the continuous time period.

A specific process of determining the habitual-charging battery level range of the user based on the charging behavior of the user is described below.

S1202: Determine whether a current remaining battery level of the vehicle is less than or equal to the second battery level value; and when it is determined that the current remaining battery level is less than or equal to the second battery level value, perform S1203.

S1203: Send a charging reminder notification to the user.

The charging reminder notification may be sent to the user in one or more of the following reminding manners:
displaying the charging reminder notification on an in-vehicle infotainment display screen of the vehicle;
displaying the charging reminder notification on a display screen of an electronic device that has a binding relationship with an in-vehicle infotainment system; and
sending a charging reminder voice by using the in-vehicle infotainment system or the electronic device that has a binding relationship with the in-vehicle infotainment system.

Optionally, when it is detected that the electric vehicle is shifted to a P gear, it is determined that the electric vehicle is in a parked state.

Different users have different psychological safety threshold ranges for a remaining battery level of the electric vehicle. In this embodiment of this application, whether the electric vehicle driven by the user needs to be charged can be determined according to a charging habit of the user; and when it is determined that the electric vehicle needs to be charged, the user is reminded to perform charging. This can effectively avoid an anxiety emotion generated by the user because the remaining battery level of the electric vehicle is lower than the psychological safety threshold range of the user, thereby improving user experience.

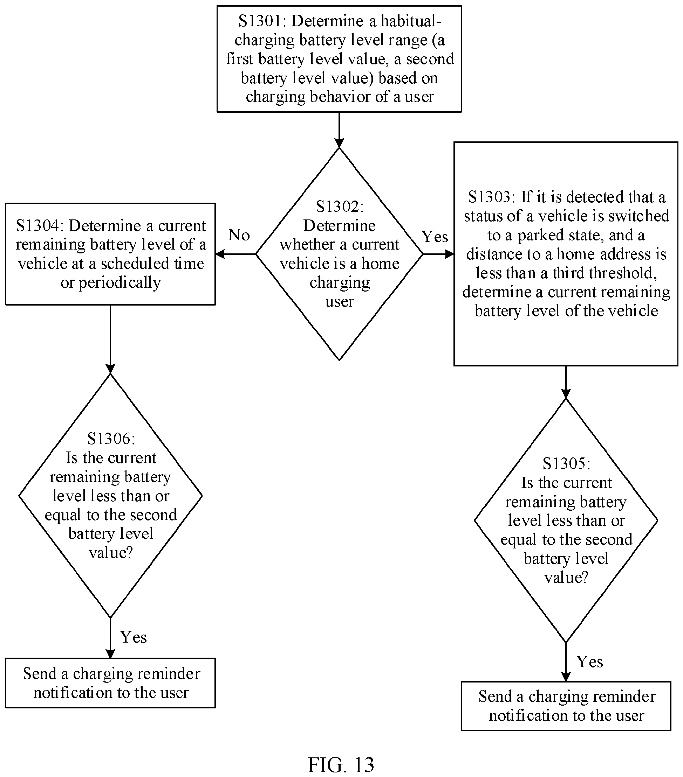

For example, based on the embodiment shown in FIG. 12, FIG. 13 is a schematic flowchart of another charging reminding method 1300 according to an embodiment of this application. As shown in FIG. 13, the method 1300 includes the following steps.

S1301: Determine a habitual-charging battery level range (a first battery level value, a second battery level value) of a user based on charging behavior of the user.

Detailed explanations of the first battery level value and the second battery level value are already provided in the embodiment shown in FIG. 12. For brevity, details are not described herein again.

S1302: Determine whether an electric vehicle is a home charging user; and if the electric vehicle is a home charging user, perform step S1303; or if the electric vehicle is not a home charging user, perform step S1304.

A specific process of determining whether the electric vehicle is a home charging user is described in detail in subsequent embodiments.

S1303: If it is detected that a status of the vehicle is switched to a parked state (for example, when the user shifts to a P gear), and a distance between the vehicle and a home address is less than a third threshold, determine a current remaining battery level of the vehicle, and continue to perform step S1305.

The third threshold may be any value in a range of 0 m to 300 m, or may be another value determined based on a user input. This is not limited in this application.

S1304: Determine a current remaining battery level of the electric vehicle at a scheduled time or periodically, and further perform step S1306.

Periodic determining may be determining at a regular interval, and scheduled determining may be determining at one or more fixed time points every day.

S1305 (S1306): Determine whether the current remaining battery level is less than or equal to the second battery level value; and if the current remaining battery level is less than or equal to the second battery level value, send a charging reminder notification to the user.

The charging reminder notification may be in a plurality of forms, and is specifically described in detail in the embodiments shown in FIG. 2 to FIG. 11. For brevity, details are not described herein again.

In this embodiment of this application, on the basis of determining, according to a charging habit of the user, whether to reminder the user to perform charging, whether the electric vehicle is a home charging user is comprehensively considered, and different reminding rules (reminder trigger conditions) are respectively specified for a home charging user and a non-home charging user. In this way, a time when a charging reminder is sent can be matched with the user habit, thereby further improving user experience.

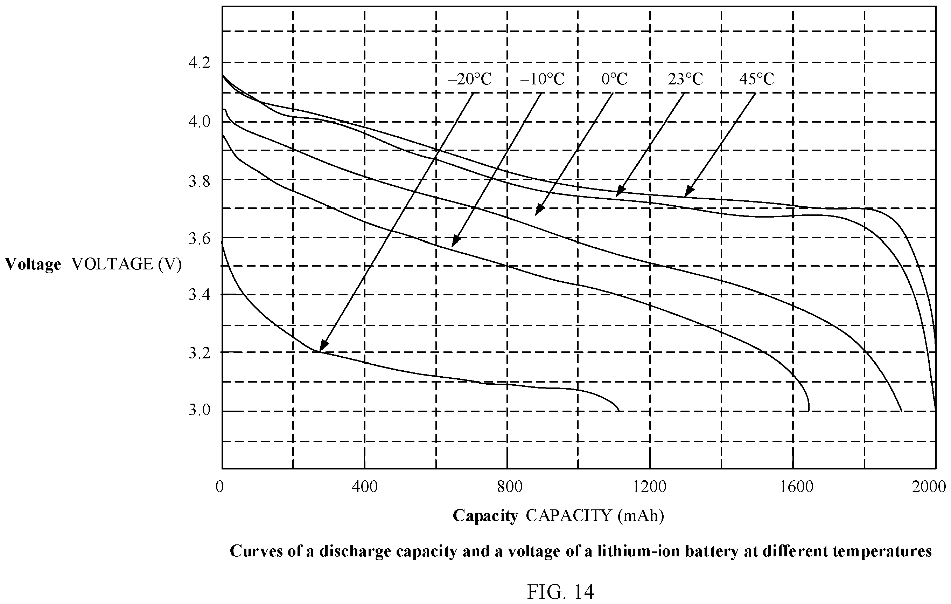

FIG. 14 is a curve diagram of relationships between a discharge capacity and a voltage of a lithium-ion battery at different temperatures according to an embodiment of this application. FIG. 14 respectively shows curves of relationships between the discharge capacity and the voltage of the lithium-ion battery at temperatures of -20°C, -10°C, 0°C, 23°C, and 45°C. It may be learned from FIG. 14 that the temperature has relatively great impact on a battery level of the battery. For example, at different temperatures, endurance distances of electric vehicles of a same model greatly differ. Especially when the temperature is excessively low or excessively high, impact of the temperature on the battery level of the battery is more significant.

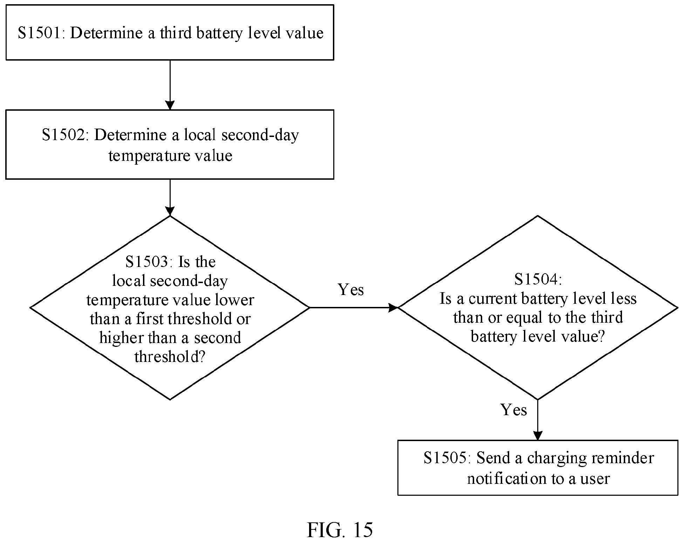

In view of this, for example, FIG. 15 is a schematic flowchart of another charging reminding method 1500 according to an embodiment of this application. As shown in FIG. 15, the method 1500 includes the following steps.

S1501: Determine a third battery level value of an electric vehicle.

It should be noted that, in this embodiment of this application, a battery level value of the electric vehicle represents an endurance distance (km) of the electric vehicle.

Optionally, the third battery level value of the electric vehicle may be 200 km.

Optionally, the third battery level value of the electric vehicle may be determined based on a habitual-charging battery level range (a first battery level value, a second battery level value) of a user, for example, may be the second battery level value + 50 km.

S1502: Determine a second-day temperature value.

Optionally, if the vehicle is not in a long-distance traveling state (for example, the vehicle is parked in a garage), the second-day temperature value is a local second-day temperature value; or if the vehicle is in a long-distance traveling state, the second-day temperature value may be a temperature value of an area at which the vehicle is expected to arrive on a second day.

S1503: Determine whether the second-day temperature value is lower than a first threshold or higher than a second threshold; and if the second-day temperature value is lower than the first threshold or higher than the second threshold, perform step S1504.

A range less than the first threshold is an extreme-cold range, and a range greater than the second threshold is an extreme-hot range. Extreme-cold ranges or extreme-hot ranges corresponding to different areas may vary, and determining of the extreme-cold range or the extreme-hot range is related to a battery model. For example, the extreme-cold range may be that a temperature is lower than -10°C (that is, the first threshold may be -10°C), and the extreme-hot range may be that a temperature is higher than 40°C (that is, the first threshold may be 40°C).

S1504: Determine whether a current remaining battery level of the electric vehicle is less than or equal to the third battery level value; and if the current remaining battery level of the electric vehicle is less than or equal to the third battery level value, perform step S1305.

S1505: Send a charging reminder notification to the user.

The charging reminder notification may be sent to the user in one or more of the following reminding manners:
displaying the charging reminder notification on an in-vehicle infotainment display screen of the vehicle;
displaying the charging reminder notification on a display screen of an electronic device that has a binding relationship with an in-vehicle infotainment system; and
sending a charging reminder voice by using the in-vehicle infotainment system or the electronic device that has a binding relationship with the in-vehicle infotainment system.

A temperature has relatively great impact on an endurance distance of a battery of the electric vehicle. In this embodiment of this application, whether the electric vehicle driven by the user needs to be charged in advance can be determined based on the next-day temperature; and when it is determined that the electric vehicle needs to be charged, the user is reminded to perform charging. This can effectively avoid a case that a current use requirement of the user cannot be met because the remaining battery level of the electric vehicle is reduced due to a sudden temperature change, thereby improving user experience.

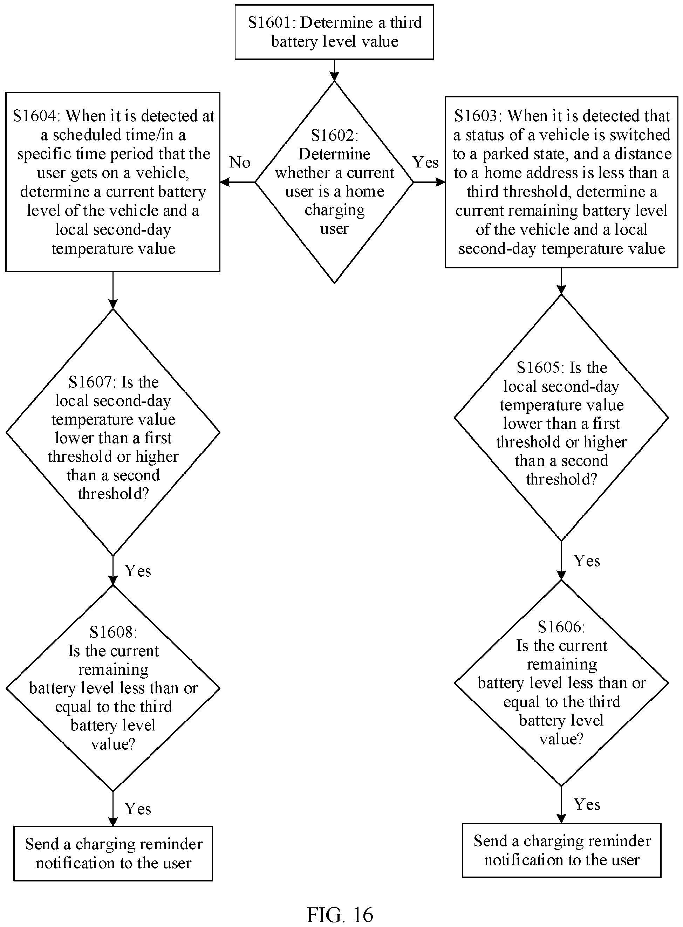

For example, FIG. 16 is a schematic flowchart of another charging reminding method 1600 according to an embodiment of this application. As shown in FIG. 16, the method 1600 includes the following steps.

S1601: Determine a third battery level value.

A detailed explanation of the third battery level value is already provided in the embodiment shown in FIG. 15. For brevity, details are not described herein again.

S1602: Determine whether an electric vehicle is a home charging user; and if the electric vehicle is a home charging user, perform step S1603; or if the electric vehicle is not a home charging user, perform step S1604.

A specific process of determining whether the electric vehicle is a home charging user is described in detail in subsequent embodiments.

S1603: If it is detected that a status of the vehicle is switched to a parked state (for example, when a user shifts to a P gear), and a distance between the vehicle and a home address is less than a third threshold, determine a current remaining battery level of the vehicle, and continue to perform step S1605.

The third threshold may be any value in a range of 0 m to 300 m, or may be another value determined based on a user input. This is not limited in this application.

S1604: Determine a current remaining battery level and a second-day temperature value at a scheduled time; or in a specific time period, when it is detected that the user gets on the vehicle, determine a current remaining battery level and a second-day temperature value, and further perform step S1607.

For example, the specific time period may be after 4:00 p.m. every day, may be between 8:00 a.m. and 12:00 a.m. every day, may be another specific time period determined based on a user input, or may be a time period that is specified by a system by default or automatically. This is not limited in this application.

Determining the temperature value at a scheduled time means determining the temperature value at one or more fixed time points. For example, the temperature value may be determined at 4:00 p.m. every day, or the temperature value may be determined at 10:00 a.m. and 7:00 p.m. every day. The fixed time point may be another time point determined based on a user input, or may be a time point that is specified by the system by default or automatically. This is not limited in this application.

S1605: Determine whether the local second-day temperature value is lower than a first threshold or higher than a second threshold; and if the local second-day temperature value is lower than the first threshold or higher than the second threshold, perform step S1606.

Detailed explanations of the first threshold and the second threshold are already provided in the embodiment shown in FIG. 15. For brevity, details are not described herein again.

S1606: Determine whether the current remaining battery level of the electric vehicle is less than or equal to the third battery level value; and if the current remaining battery level of the electric vehicle is less than or equal to the third battery level value, send a charging reminder notification to the user.

S1607: Determine whether the local second-day temperature value is lower than a first threshold or higher than a second threshold; and if the local next-day temperature value is lower than the first threshold or higher than the second threshold, perform step S1608.

S1608: Determine whether the current remaining battery level of the electric vehicle is less than or equal to the third battery level value; and if the current remaining battery level of the electric vehicle is less than or equal to the third battery level value, send a charging reminder notification to the user.

The charging reminder notification may be in a plurality of forms, and is specifically described in detail in the embodiments shown in FIG. 2 to FIG. 11. For brevity, details are not described herein again.

In this embodiment of this application, on the basis of determining, based on the next-day temperature, whether to reminder the user to perform charging, whether the electric vehicle is a home charging user is comprehensively considered, and different reminding rules (reminder trigger conditions) are respectively specified for a home charging user and a non-home charging user. In this way, a time when a charging reminder is sent can be matched with the user habit, thereby further improving user experience.

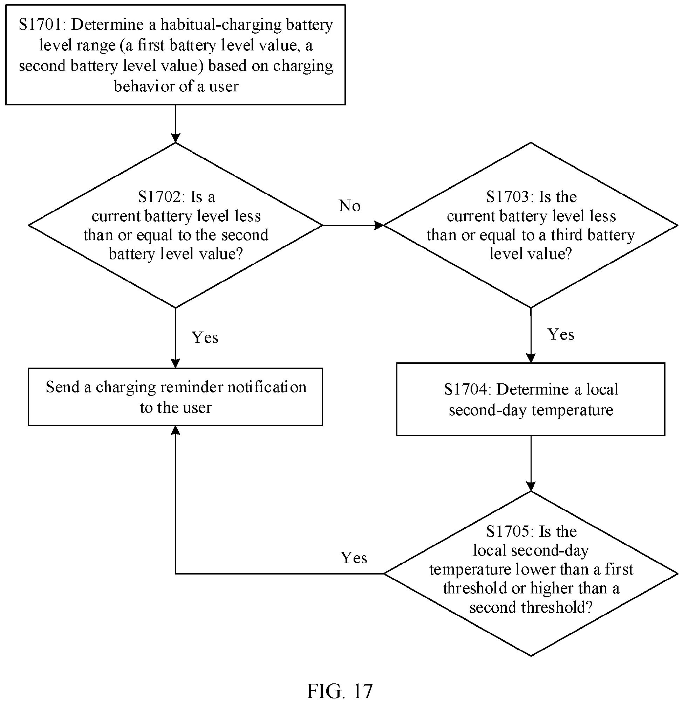

For example, FIG. 17 is a schematic flowchart of another charging reminding method 1700 according to an embodiment of this application. As shown in FIG. 17, the method 1700 includes the following steps.

S1701: Determine a habitual-charging battery level range (a first battery level value, a second battery level value) of a user based on charging behavior of the user.

Detailed explanations of the first battery level value and the second battery level value are already provided in the embodiment shown in FIG. 13. For brevity, details are not described herein again.

S1702: Determine whether a current remaining battery level of an electric vehicle is less than or equal to the second battery level value; and if the current remaining battery level of the electric vehicle is less than or equal to the second battery level value, send a charging reminder notification to the user; or if the current remaining battery level of the electric vehicle is not less than or equal to the second battery level value, continue to perform step S1703.

S1703: Determine whether the current remaining battery level of the electric vehicle is less than or equal to a third battery level value; and if the current remaining battery level of the electric vehicle is less than or equal to the third battery level value, perform step S1704.

A detailed explanation of the third battery level value is already provided in the embodiment shown in FIG. 15. For brevity, details are not described herein again.

S1704: Determine a second-day temperature.

S1705: Determine whether the second-day temperature is lower than a first threshold or higher than a second threshold; and if the second-day temperature is lower than the first threshold or higher than the second threshold, send a charging reminder notification to the user.

Detailed explanations of the first threshold and the second threshold are already provided in the embodiment shown in FIG. 15. For brevity, details are not described herein again.

A manner of sending the charging reminder notification is already described in detail in the embodiments shown in FIG. 2 to FIG. 11. For brevity, details are not described herein again.

In this embodiment of this application, whether the user needs to be reminded to charge the vehicle can be comprehensively determined based on the charging habit of the user and the second-day temperature; and when it is determined that the user needs to be reminded, the charging reminder notification is sent to the user. This not only can effectively avoid an anxiety emotion generated by the user because the remaining battery level of the electric vehicle is lower than a psychological safety threshold range of the user, but also can effectively avoid a case that a current use requirement of the user cannot be met because the remaining battery level of the electric vehicle is reduced due to a sudden temperature change, thereby further improving user experience.

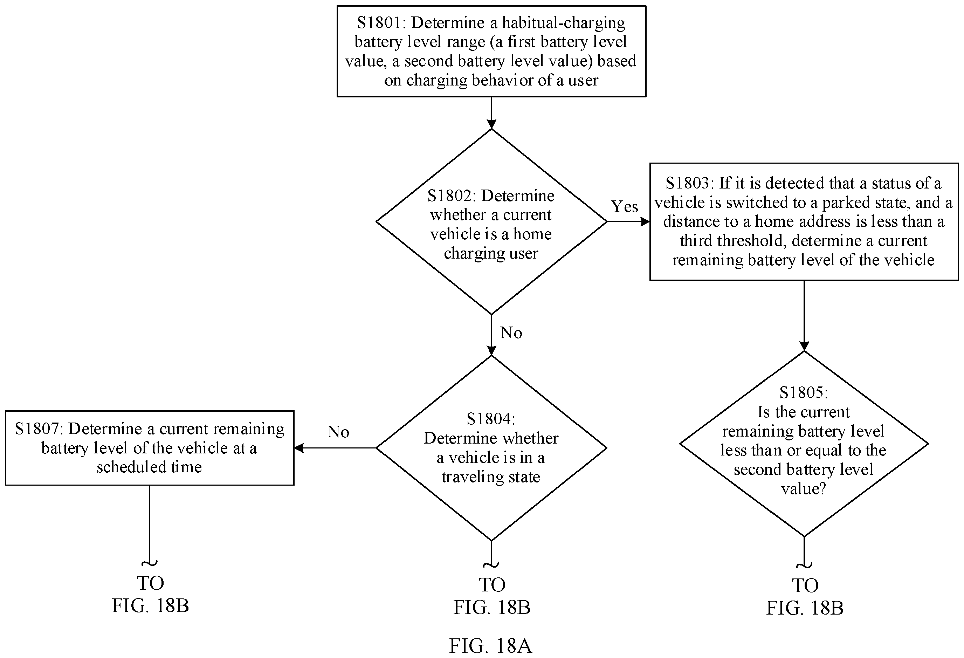

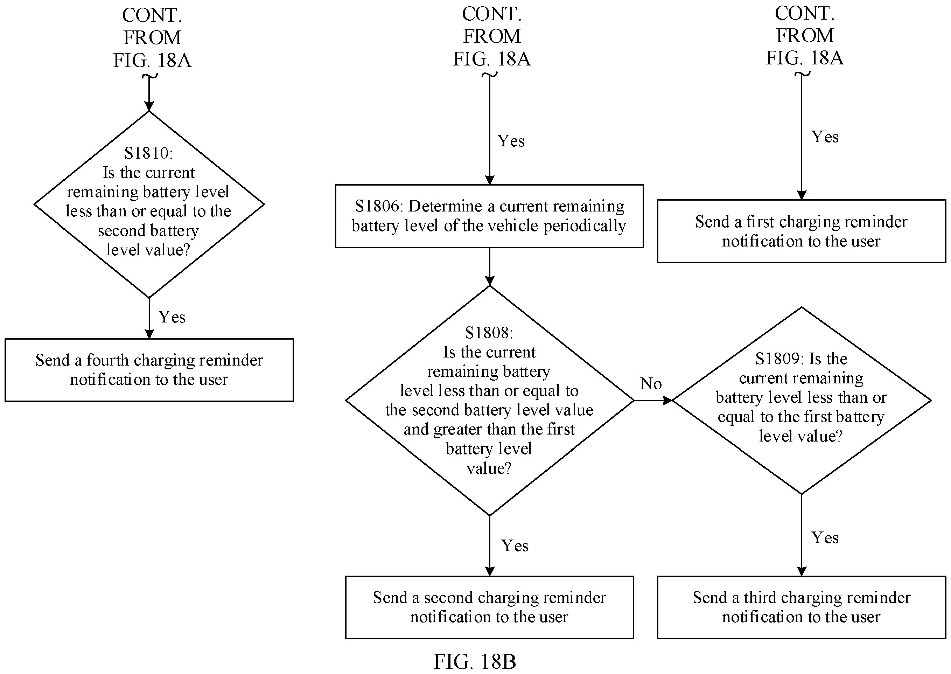

For example, based on the embodiment shown in FIG. 12 or FIG. 13, FIG. 18A and FIG. 18B are a schematic flowchart of another charging reminding method 1800 according to an embodiment of this application. As shown in FIG. 18A and FIG. 18B, the method 1800 includes the following steps.

S1801: Determine a habitual-charging battery level range (a first battery level value, a second battery level value) of a user based on charging behavior of the user.

Detailed explanations of the first battery level value and the second battery level value are already provided in the embodiment shown in FIG. 12. For brevity, details are not described herein again.

S1802: Determine whether an electric vehicle is a home charging user; and if the electric vehicle is a home charging user, perform step S1803; or if the electric vehicle is not a home charging user, perform step S1804.

A specific process of determining whether the electric vehicle is a home charging user is described in detail in subsequent embodiments.

S1803: If it is detected that a status of the vehicle is switched to a parked state (for example, when the user shifts to a P gear), and a distance between the vehicle and a home address is less than a third threshold, determine a current remaining battery level of the vehicle, and continue to perform step S1805.

The third threshold may be any value in a range of 0 m to 300 m, or may be another value determined based on a user input. This is not limited in this application.

S1804: Determine whether the electric vehicle is in a traveling state; and if the electric vehicle is in a traveling state, perform step S1806; or if the electric vehicle is not in a traveling state, perform step S1807.

S1805: Determine whether the current remaining battery level of the electric vehicle is less than or equal to the second battery level value; and if the current remaining battery level of the electric vehicle is less than or equal to the second battery level value, send a first charging reminder notification to the user.

The first charging reminder notification (which may be considered as a strong reminder) includes a charging reminder notification displayed in a large window or in full screen on a display screen of the electric vehicle, and further includes a charging reminder voice. The first charging reminder notification is associated with a control for "opening a charging port".

S1806: Periodically determine a current remaining battery level of the electric vehicle, and continue to perform step S1808.

Periodic determining may be determining at a regular interval.

S1807: Determine a current remaining battery level of the electric vehicle at a scheduled time, and continue to perform step S1810.

Periodic determining may be determining at one or more fixed time points every day.

S1808: Determine whether the current remaining battery level of the electric vehicle is less than or equal to the second battery level value and is greater than the first battery level value; and if the current remaining battery level of the electric vehicle is less than or equal to the second battery level value and is greater than the first battery level value, send a second charging reminder notification to the user; or if the current remaining battery level of the electric vehicle is not less than or equal to the second battery level value and is not greater than the first battery level value, perform step S1809.

The second charging reminder notification (which may be considered as a weak reminder) includes a charging reminder notification statically displayed (for example, in a form of a blinking icon or a foldable card) in a blank space on a display screen of the electric vehicle.

S1809: Determine whether the current remaining battery level of the electric vehicle is less than or equal to the first battery level value; and if the current remaining battery level of the electric vehicle is less than or equal to the first battery level value, send a third charging reminder notification to the user.

The third charging reminder notification (which may be considered as a strong reminder) includes a charging reminder notification displayed in a large window or in full screen on the display screen of the electric vehicle, and further includes a charging reminder voice. The third charging reminder notification is associated with a control related to "navigating to a target charging station".

S1810: Determine whether the current remaining battery level of the electric vehicle is less than or equal to the second battery level value; and if the current remaining battery level of the electric vehicle is less than or equal to the second battery level value, send a fourth charging reminder notification to the user.

The fourth charging reminder notification includes a charging reminder notification displayed on an electronic device that has a binding relationship with an in-vehicle infotainment system of the electric vehicle. The fourth charging reminder notification may be displayed in a form of a card, or may be displayed in a form of a card and a voice or a vibration prompt or the like. This is not limited in this application.

Optionally, when it is determined that the vehicle is a home charging user, step S1807 and step S1810 may also be performed.

In this embodiment of this application, on the basis of determining, according to the charging habit of the user, whether to reminder the user to perform charging, whether the electric vehicle is a home charging user and a status (traveling, parked, or not started) of the electric vehicle are comprehensively considered. Charging reminders sent in different cases vary in forms. For example, when the home charging user goes home and parks the vehicle, a strong reminder is sent to the user; and when the vehicle is in a traveling state, a weak reminder is sent to the user for traveling safety. In this way, not only the user can be reminded in a timely manner when the user needs to be reminded to perform charging, but also the reminding manner can adapt to a current status of the user, thereby further improving user experience.

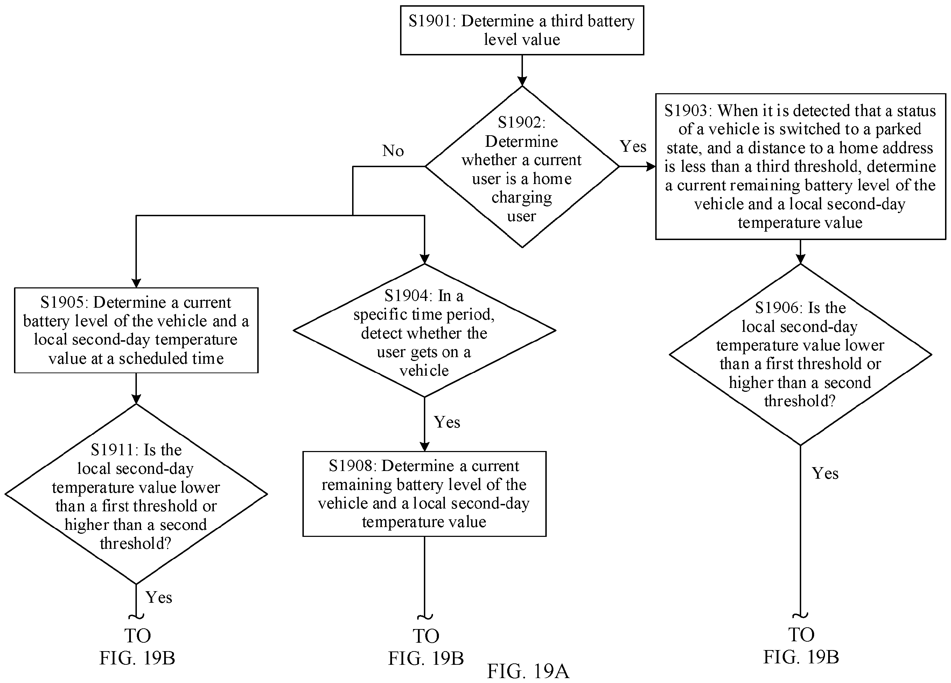

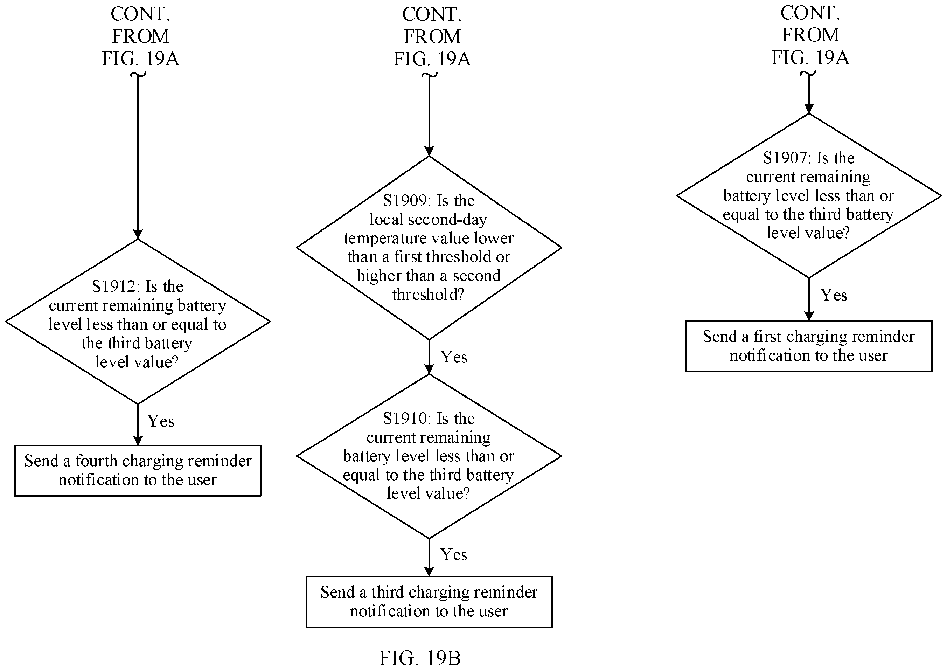

For example, based on the embodiment shown in FIG. 15 or FIG. 16, FIG. 19A and FIG. 19B are a schematic flowchart of another charging reminding method 1900 according to an embodiment of this application. As shown in FIG. 19A and FIG. 19B, the method 1900 includes the following steps.

S1901: Determine a third battery level value.

A detailed explanation of the third battery level value is already provided in the embodiment shown in FIG. 15. For brevity, details are not described herein again.

S1902: Determine whether an electric vehicle is a home charging user; and if the electric vehicle is a home charging user, perform step S1903; or if the electric vehicle is not a home charging user, perform step S1904 and/or S1905.

A specific process of determining whether the electric vehicle is a home charging user is described in detail in subsequent embodiments.

S1903: If it is detected that a status of the vehicle is switched to a parked state (for example, when a user shifts to a P gear), and a distance between the vehicle and a home address is less than a third threshold, determine a current remaining battery level of the vehicle, and continue to perform step S1906.

The third threshold may be any value in a range of 0 m to 300 m, or may be another value determined based on a user input. This is not limited in this application.

S1904: In a specific time period, detect whether the user gets on the vehicle; and if the user gets on the vehicle, perform step S1908.

For example, the specific time period may be after 4:00 p.m. every day, may be between 8:00 a.m. and 12:00 a.m. every day, may be another specific time period determined based on a user input, or may be a time period that is specified by a system by default or automatically. This is not limited in this application.

Optionally, the step S1904 may be replaced with as follows: When the vehicle is in a traveling state, further perform step S1908 periodically.

S1905: Determine a current battery level of the electric vehicle and a second-day temperature value at a scheduled time, and continue to perform step S1911.

Determining the temperature value at a scheduled time means determining the temperature value at one or more fixed time points. For example, the temperature value may be determined at 4:00 p.m. every day, or the temperature value may be determined at 10:00 a.m. and 7:00 p.m. every day. The fixed time point may be another time point determined based on a user input, or may be a time point that is specified by the system by default or automatically. This is not limited in this application.

S1906: Determine whether the local second-day temperature value is lower than a first threshold or higher than a second threshold; and if the local second-day temperature value is lower than the first threshold or higher than the second threshold, perform step S1907.

Detailed explanations of the first threshold and the second threshold are already provided in the embodiment shown in FIG. 15. For brevity, details are not described herein again.

S1907: Determine whether the current remaining battery level of the electric vehicle is less than or equal to the third battery level value; and if the current remaining battery level of the electric vehicle is less than or equal to the third battery level value, send a first charging reminder notification to the user.

The first charging reminder notification (which may be considered as a strong reminder) includes a charging reminder notification displayed in a large window or in full screen on a display screen of the electric vehicle, and further includes a charging reminder voice. The first charging reminder notification is associated with a control for "opening a charging port".

S1908: Determine a current remaining battery level of the electric vehicle and a local second-day temperature value, and continue to perform step S1910.

S1909: Determine whether the local second-day temperature value is lower than a first threshold or higher than a second threshold; and if the local second-day temperature value is lower than the first threshold or higher than the second threshold, perform step S1910.

S1910: Determine whether the current remaining battery level of the electric vehicle is less than or equal to the third battery level value; and if the current remaining battery level of the electric vehicle is less than or equal to the third battery level value, send a third charging reminder notification to the user.

The third charging reminder notification (which may be considered as a strong reminder) includes a charging reminder notification displayed in a large window or in full screen on a display screen of the electric vehicle, and further includes a charging reminder voice. The third charging reminder notification is associated with a control related to "navigating to a target charging station".

S1911: Determine whether the local second-day temperature value is lower than a first threshold or higher than a second threshold; and if the local second-day temperature value is lower than the first threshold or higher than the second threshold, perform step S1612.

S1912: Determine whether the current remaining battery level of the electric vehicle is less than or equal to the third battery level value; and if the current remaining battery level of the electric vehicle is less than or equal to the third battery level value, send a fourth charging reminder notification to the user.

The fourth charging reminder notification includes a charging reminder notification displayed on an electronic device that has a binding relationship with an in-vehicle infotainment system of the electric vehicle. The fourth charging reminder notification may be displayed in a form of a card, or may be displayed in a form of a card and a voice or a vibration prompt or the like. This is not limited in this application.

Optionally, the electronic device that has a binding relationship with the in-vehicle infotainment system of the electric vehicle may be a mobile phone, a tablet, a band, a watch, or the like, or may be an electronic device without a screen, for example, a XiaoAi speaker or a projection device.

Optionally, when it is determined that the vehicle is a home charging user, step S1905, step S1911, and step S1912 may also be performed.

In this embodiment of this application, on the basis of determining, based on the next-day temperature, whether to reminder the user to perform charging, whether the electric vehicle is a home charging user and a status (traveling, parked, or not started) of the electric vehicle are comprehensively considered. Charging reminders sent in different cases vary in forms. In this way, not only the user can be reminded in a timely manner when the user needs to be reminded to perform charging, but also the reminding manner can adapt to a current status of the user, thereby further improving user experience.

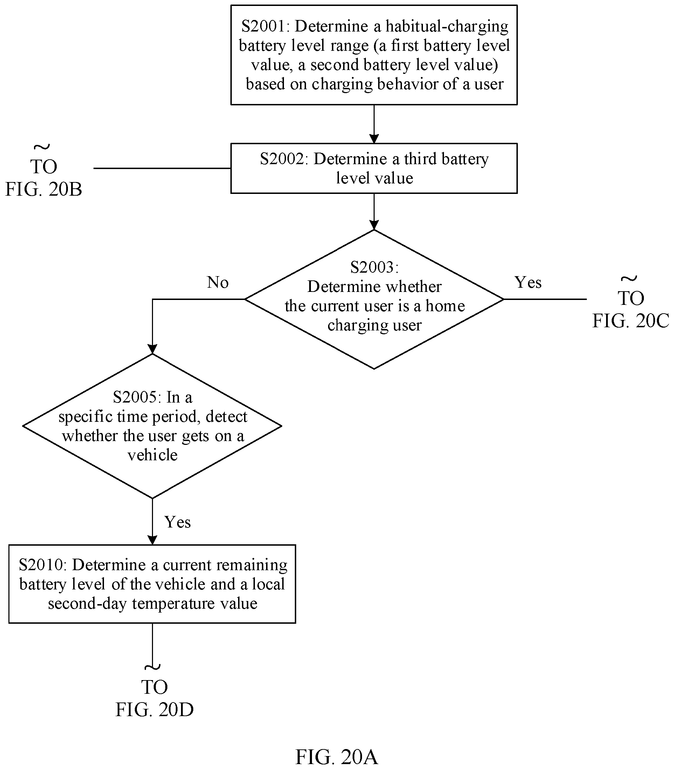

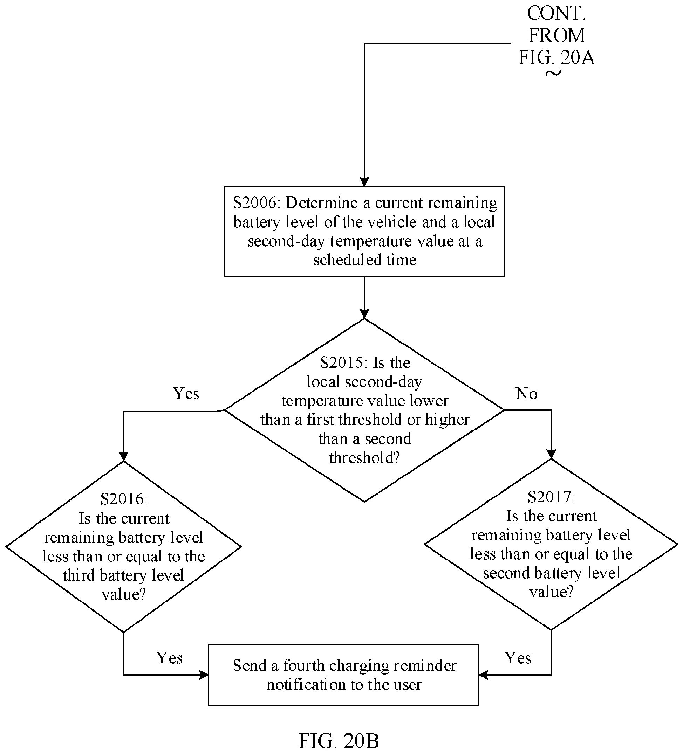

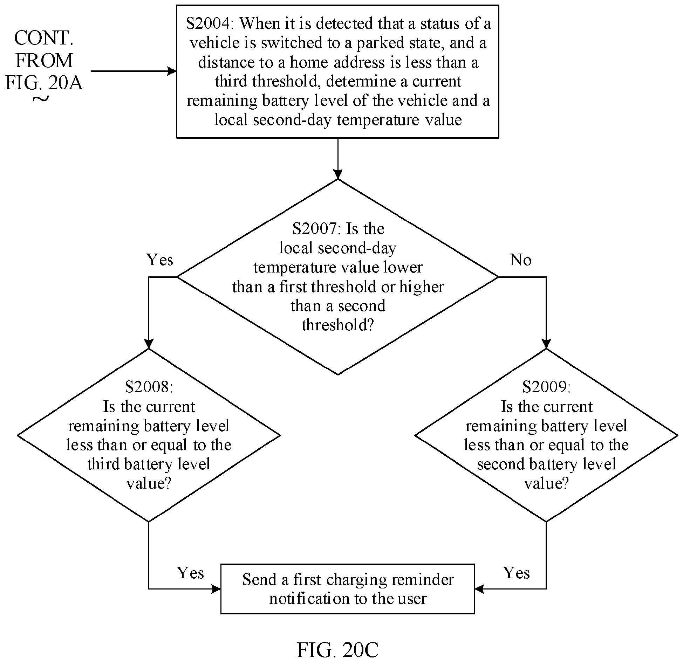

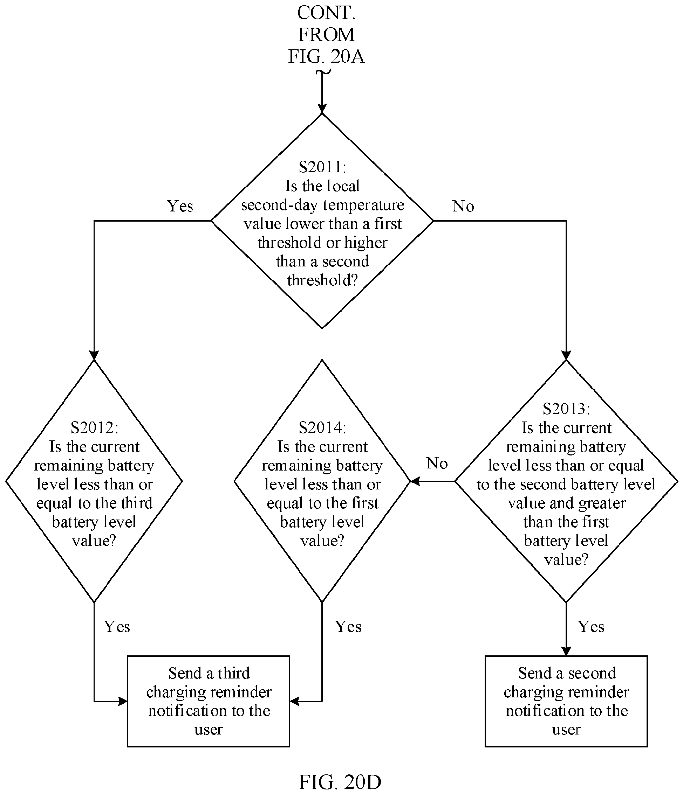

For example, based on the embodiments shown in FIG. 12 to FIG. 19A and FIG. 19B, FIG. 20A to FIG. 20D are a schematic flowchart of another charging reminding method 2000 according to an embodiment of this application. As shown in FIG. 20A to FIG. 20D, the method 2000 includes the following steps.

S2001: Determine a habitual-charging battery level range (a first battery level value, a second battery level value) of a user based on charging behavior of the user.

Detailed explanations of the first battery level value and the second battery level value are already provided in the embodiment shown in FIG. 12. For brevity, details are not described herein again.

S2002: Determine a third battery level value.

A detailed explanation of the third battery level value is already provided in the embodiment shown in FIG. 15. For brevity, details are not described herein again.

S2003: Determine whether an electric vehicle is a home charging user; and if the electric vehicle is a home charging user, perform step S2004; or if the electric vehicle is not a home charging user, perform step S2005 and/or S2006.

S2004: If it is detected that a status of the vehicle is switched to a parked state (for example, when the user shifts to a P gear), and a distance between the vehicle and a home address is less than a third threshold, determine a current remaining battery level of the vehicle and a local second-day temperature value, and continue to perform step S2007.

The third threshold may be any value in a range of 0 m to 300 m, or may be another value determined based on a user input. This is not limited in this application.

S2005: In a specific time period, detect whether the user gets on the vehicle; and if the user gets on the vehicle, perform step S2010.

For example, the specific time period may be after 4:00 p.m. every day, may be between 8:00 a.m. and 12:00 a.m. every day, may be another specific time period determined based on a user input, or may be a time period that is specified by a system by default or automatically. This is not limited in this application.

Optionally, the step S2005 may be replaced with as follows: When the vehicle is in a traveling state, perform step S2010 periodically.

S2006: Determine a current battery level of the electric vehicle and a second-day temperature value at a scheduled time, and continue to perform step S2015.

Determining the temperature value at a scheduled time means determining the temperature value at one or more fixed time points. For example, the temperature value may be determined at 4:00 p.m. every day, or the temperature value may be determined at 10:00 a.m. and 7:00 p.m. every day. The fixed time point may be another time point determined based on a user input, or may be a time point that is specified by the system by default or automatically. This is not limited in this application.

S2007: Determine whether the local second-day temperature value is lower than a first threshold or higher than a second threshold; and if the local second-day temperature value is lower than the first threshold or higher than the second threshold, perform step S2008; or if the local second-day temperature value is not lower than the first threshold or higher than the second threshold, perform step S2009.

Detailed explanations of the first threshold and the second threshold are already provided in the embodiment shown in FIG. 13. For brevity, details are not described herein again.

S2008: Determine whether the current remaining battery level of the electric vehicle is less than or equal to the third battery level value; and if the current remaining battery level of the electric vehicle is less than or equal to the third battery level value, send a first charging reminder notification to the user.

S2009: Determine whether the current remaining battery level of the electric vehicle is less than or equal to the second battery level value; and if the current remaining battery level of the electric vehicle is less than or equal to the second battery level value, send a first charging reminder notification to the user.

The first charging reminder notification (which may be considered as a strong reminder) includes a charging reminder notification displayed in a large window or in full screen on a display screen of the electric vehicle, and further includes a charging reminder voice. The first charging reminder notification is associated with a control for "opening a charging port".

In addition, optionally, when it is determined, according to step S2008, that charging needs to be reminded and the first charging reminder notification is sent, the first charging reminder notification includes related content (for example, as shown in FIG. 3) that reminds the user that "A next-day temperature is low, and charging is needed"; and when it is determined, according to step S2009, that charging needs to be reminded and the first charging reminder notification is sent, the first charging reminder notification includes related content (for example, as shown in FIG. 2) that reminds the user that "It is determined, according to a charging habit of the user, that charging is needed".

S2010: Determine a current remaining battery level of the electric vehicle and a local second-day temperature value, and continue to perform step S2011.

S2011: Determine whether the local second-day temperature value is lower than a first threshold or higher than a second threshold; and if the local second-day temperature value is lower than the first threshold or higher than the second threshold, perform step S2012; or if the local second-day temperature value is not lower than the first threshold or higher than the second threshold, perform step S2013.

S2012: Determine whether the current remaining battery level of the electric vehicle is less than or equal to the third battery level value; and if the current remaining battery level of the electric vehicle is less than or equal to the third battery level value, send a third charging reminder notification to the user.

The third charging reminder notification (which may be considered as a strong reminder) includes a charging reminder notification displayed in a large window or in full screen on a display screen of the electric vehicle, and further includes a charging reminder voice. The third charging reminder notification is associated with a control related to "navigating to a target charging station".

S2013: Determine whether the current remaining battery level of the electric vehicle is less than or equal to the second battery level value and is greater than the first battery level value; and if the current remaining battery level of the electric vehicle is less than or equal to the second battery level value and is greater than the first battery level value, send a second charging reminder notification to the user; or if the current remaining battery level of the electric vehicle is not less than or equal to the second battery level value and is not greater than the first battery level value, perform step S2014.

The second charging reminder notification (which may be considered as a weak reminder) includes a charging reminder notification (for example, which may be in a form shown in FIG. 4(a) or in FIG. 5(a)) statically displayed (for example, in a form of a blinking icon or a suggestion card) in a blank space on a display screen of the electric vehicle.

S2014: Determine whether the current remaining battery level of the electric vehicle is less than or equal to the first battery level value; and if the current remaining battery level of the electric vehicle is less than or equal to the first battery level value, send a third charging reminder notification to the user.

In addition, optionally, when it is determined, according to step S2012, that charging needs to be reminded and the third charging reminder notification is sent, the third charging reminder notification includes related content (for example, as shown in FIG. 3) that reminds the user that "A next-day temperature is low, and charging is needed"; and when it is determined, according to step S2014, that charging needs to be reminded and the third charging reminder notification is sent, the third charging reminder notification includes related content (for example, as shown in FIG. 2) that reminds the user that "It is determined, according to a charging habit of the user, that charging is needed".

S2015: Determine whether the local second-day temperature value is lower than a first threshold or higher than a second threshold; and if the local second-day temperature value is lower than the first threshold or higher than the second threshold, perform step S2016; or if the local second-day temperature value is not lower than the first threshold or higher than the second threshold, perform step S2017.

Detailed explanations of the first threshold and the second threshold are already provided in the embodiment shown in FIG. 15. For brevity, details are not described herein again.

S2016: Determine whether the current remaining battery level of the electric vehicle is less than or equal to the third battery level value; and if the current remaining battery level of the electric vehicle is less than or equal to the third battery level value, send a fourth charging reminder notification to the user.

The fourth charging reminder notification includes a charging reminder notification displayed on an electronic device that has a binding relationship with an in-vehicle infotainment system of the electric vehicle. The fourth charging reminder notification may be displayed in a form of a card, or may be displayed in a form of a card and a voice or a vibration prompt or the like. This is not limited in this application.

In addition, optionally, when it is determined, according to step S2016, that charging needs to be reminded and the fourth charging reminder notification is sent, the fourth charging reminder notification includes related content (for example, as shown in FIG. 3) that reminds the user that "A next-day temperature is low, and charging is needed"; and when it is determined, according to step S2017, that charging needs to be reminded and the fourth charging reminder notification is sent, the fourth charging reminder notification includes related content (for example, as shown in FIG. 2) that reminds the user that "It is determined, according to a charging habit of the user, that charging is needed".

S2017: Determine whether the current remaining battery level of the electric vehicle is less than or equal to the second battery level value; and if the current remaining battery level of the electric vehicle is less than or equal to the second battery level value, send a fourth charging reminder notification to the user.

Optionally, when it is determined that the user is a home charging user, step S2006 and step S2015 to step S2017 may also be performed.

Optionally, when the first charging reminder notification, the second charging reminder notification, the third charging reminder notification, and the fourth charging reminder notification are sent to the user, an ambient light reminder (an ambient light inside the vehicle, an ambient light outside the vehicle, a projection light, a pixel light, or the like), a seat vibration reminder, a fragrance system reminder, a band reminder, and the like may be further combined. This is not limited in this application.

Optionally, whether the user is a home charging user may be determined through profile recognition of the user.

In this embodiment of this application, whether the user needs to be reminded to perform charging can be determined based on the charging habit of the user and the next-day temperature. In addition, based on this, whether the electric vehicle is a home charging user and a status (traveling, parked, or not started) of the electric vehicle are comprehensively considered. Charging reminders sent in different cases vary in forms. In this way, not only the user can be reminded in a timely manner when the user needs to be reminded to perform charging, but also the reminding manner can adapt to a current status of the user, thereby further improving user experience.

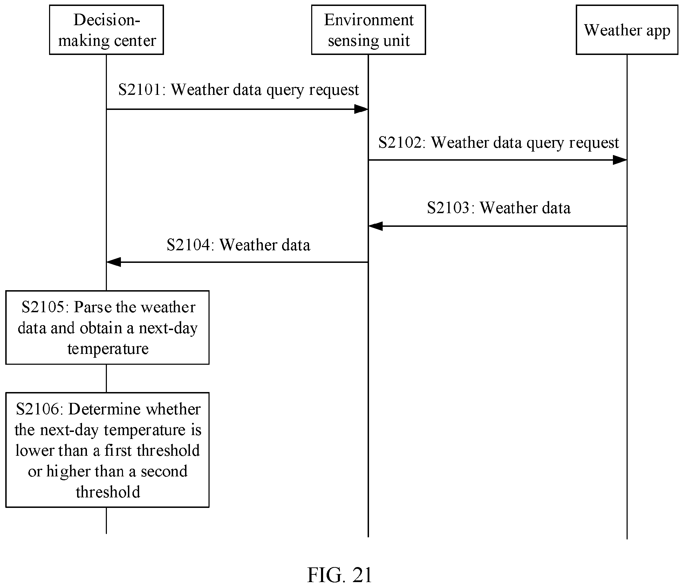

To better understand a process of determining a temperature in embodiments of this application, for example, FIG. 21 is a schematic flowchart of a method 2100 for determining the temperature according to an embodiment of this application. As shown in FIG. 21, the method 2100 includes the following steps.

S2101: A decision-making center of a vehicle sends a weather data query request to an environment sensing unit.

Weather data includes data related to next-day weather forecast.

S2102: The environment sensing unit forwards the weather data query request to a weather app.

S2103: In response to the received weather data query request, the weather app sends the weather data to the environment sensing unit.

Optionally, the weather app returns weather data of next seven days. The weather data may include data such as a current temperature, a highest temperature in a day, a lowest temperature in a day, a highest temperature at night, and a lowest temperature at night.

S2104: After receiving the weather data, the environment sensing unit forwards the weather data to the decision-making center.

S2105: After receiving the weather data, the decision-making center parses the weather data and obtains a next-day temperature.

S2106: The decision-making center further determines, based on the obtained next-day temperature, whether the next-day temperature is lower than a first threshold or higher than a second threshold.

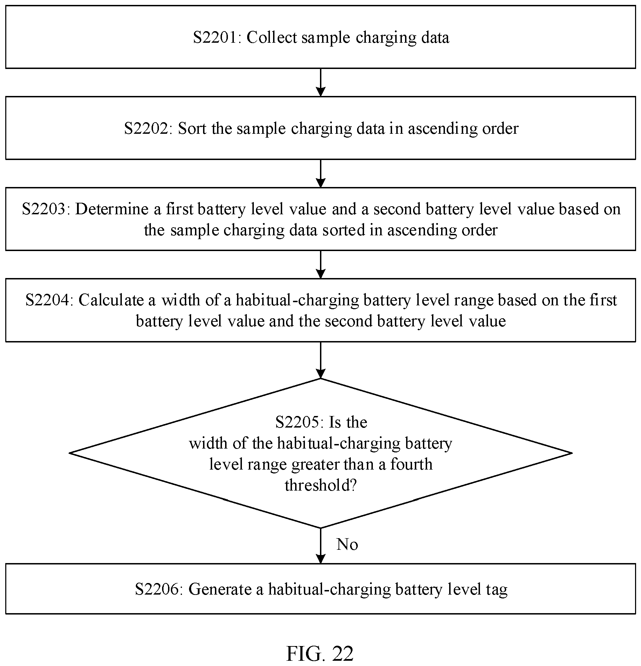

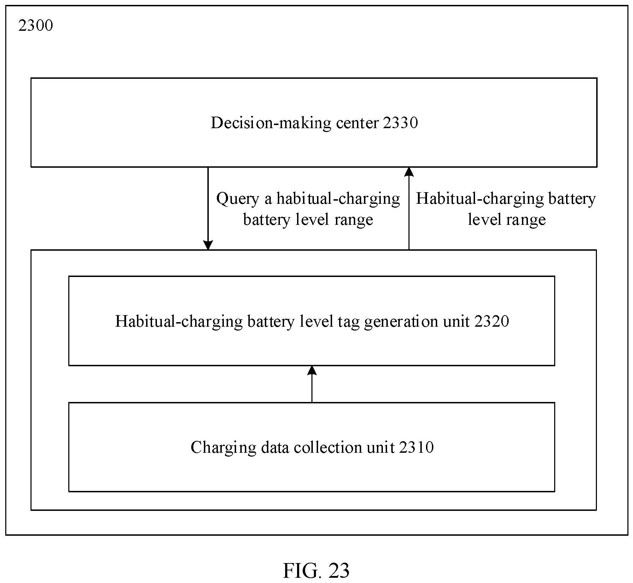

The following describes, with reference to FIG. 22 and FIG. 23, a process of determining a habitual-charging battery level range of a user. FIG. 22 is a schematic flowchart of a method 2200 for determining a habitual-charging battery level range of a user according to an embodiment of this application. As shown in FIG. 22, the method 2200 includes the following steps.

S2201: Collect sample charging data.

The sample charging data may be charging data of an electric vehicle of a user in a time period (for example, in the last three months), or may be charging data of a user who performs charging for a plurality of consecutive times. This is not limited in this application.

It should be understood that a sample capacity of the sample charging data should be representative.

Optionally, the sample capacity of the sample charging data is controlled to be greater than or equal to 50, and then a confidence P thereof is calculated. When P < 0.5, it is considered that the sample charging data is representative.

The sample charging data includes a remaining battery level of the vehicle when the user starts to charge the vehicle, may further include charging place data (sample charging location data) of the user, may further include charging time data (sample charging time data) of the user, may further include a price when the user performs charging, and may further include other charging data. This is not limited in this application.

S2202: Sort the sample charging data in ascending order.

S2203: Determine a habitual-charging battery level range (a first battery level value, a second battery level value) of the user based on the sample charging data sorted in ascending order.

Optionally, normal distribution analysis is performed on the sample charging data to take the first battery level value as a 5% quantile and the second battery level value as a 95% quantile.

Optionally, the bottom 5% of the sample charging data is removed, and the largest 5% of the sample charging data is also removed. In the remaining sample charging data, a minimum value is taken as the first battery level value, and a maximum value is taken as the second battery level value.

S2204: Determine a width of the habitual-charging battery level range based on the first battery level value and the second battery level value.

The width of the habitual-charging battery level range = the second battery level value - the first battery level value.

S2205: Determine whether the width of the habitual-charging battery level range is greater than a fourth threshold; and if the width of the habitual-charging battery level range is greater than the fourth threshold, do not generate a charging battery level tag; or if the width of the habitual-charging battery level range is not greater than the fourth threshold, generate a charging battery level tag.

The charging battery level tag indicates the habitual-charging battery level range of the user.

For example, FIG. 23 is a diagram of functional modules of an apparatus 2300 for determining a habitual-charging battery level range of a user according to an embodiment of this application. As shown in FIG. 23, the apparatus 2300 includes a charging data collection unit 2310, a charging battery level tag generation unit 2320, and a decision-making center 2330.

The charging data collection unit 2310 is configured to collect sample charging data.

A detailed explanation of the sample charging data is already provided in step S2201. For brevity, details are not described herein again.

The habitual-charging battery level tag generation unit 2320 is configured to generate a habitual-charging battery level tag based on the sample charging data.

A process in which the habitual-charging battery level tag generation unit 2320 generates the habitual-charging battery level tag based on the sample charging data is the same as that in step S2202 to step S2205. For brevity, details are not described herein again.

The decision-making center 2330 is configured to query a habitual-charging battery level range of a user from the habitual-charging battery level tag generation unit 2320, and is further configured to receive the habitual-charging battery level range that is of the user and that is sent by the habitual-charging battery level tag generation unit 2320.

In this embodiment of this application, the habitual-charging battery level range of the user is generated based on historical charging data of the user, so that authenticity of the determined habitual-charging battery level range is relatively high, which can further provide a reliable basis for subsequently determining, based on the habitual-charging battery level range, whether the user needs to be reminded to perform charging.

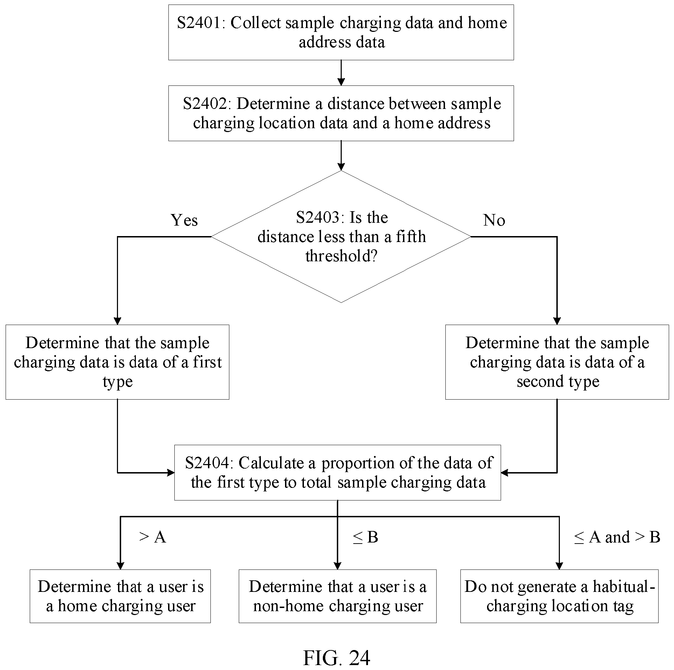

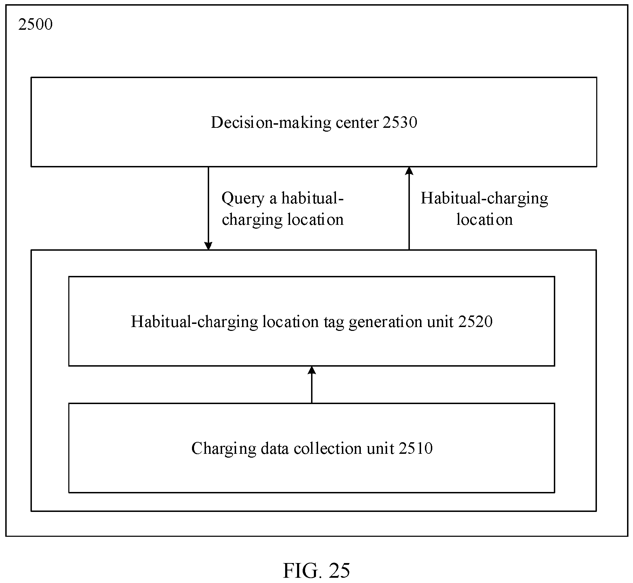

The following describes, with reference to FIG. 24 and FIG. 25, a process of determining whether a vehicle of a user is a home charging user. FIG. 24 is a schematic flowchart of a method 2400 for determining whether a vehicle of a user is a home charging user according to an embodiment of this application. As shown in FIG. 24, the method 2400 includes the following steps.

S2401: Collect sample charging data.

The sample charging data may be charging data of an electric vehicle of a user in a time period (for example, in the last three months), or may be charging data of a user who performs charging for a plurality of consecutive times. This is not limited in this application.

It should be understood that a sample capacity of the sample charging data should be large enough, so that the sample charging data is representative.

The sample charging data includes charging place data (sample charging location data) of the user, may further include a remaining battery level of the vehicle when the user starts to charge the vehicle, may further include charging time data (sample charging time data) of the user, may further include a price when the user performs charging, and may further include other charging data. This is not limited in this application.

S2402: Determine a distance between a sample charging location and a home address.

In step S2401, the sample charging location data included in the sample charging data indicates a charging location of the user.

S2403: Determine whether the distance between the sample charging location and the home address is less than a fifth threshold; and if the distance between the sample charging location and the home address is less than the fifth threshold, determine that corresponding sample charging data is data of a first type; or if the distance between the sample charging location and the home address is not less than the fifth threshold, determine that corresponding sample charging data is data of a second type.

S2404: Calculate a proportion of the data of the first type to all sample charging data; and if the proportion is greater than A, determine that the vehicle is a home charging user, and further generate a habitual-charging location tag; if the proportion is less than or equal to B, determine that the vehicle is a non-home charging user, and further generate a habitual-charging location tag; or if the proportion is less than or equal to A and is greater than B, do not generate a habitual-charging location tag.

Optionally, a value of A may be 50 km.

The habitual-charging location tag indicates whether the vehicle is a home charging user or a non-home charging user.

For example, FIG. 25 is a diagram of functional modules of an apparatus 2500 for determining whether a vehicle of a user is a home charging user according to an embodiment of this application. As shown in FIG. 25, the apparatus 2500 includes a charging data collection unit 2510, a charging location tag generation unit 2520, and a decision-making center 2530.

The charging data collection unit 2510 is configured to collect sample charging data.

A detailed explanation of the sample charging data is already provided in step S2401. For brevity, details are not described herein again.

The habitual-charging battery level tag generation unit 2520 is configured to generate a habitual-charging location tag based on the sample charging data.

A process in which the habitual-charging location tag generation unit 2520 generates the habitual-charging location tag based on the sample charging data is the same as that in step S2402 to step S2404. For brevity, details are not described herein again.

The decision-making center 2530 is configured to query a charging location (a home charging user or a non-home charging user) of a vehicle from the habitual-charging location tag generation unit 2520, and is further configured to receive the charging location (a home charging user or a non-home charging user) that is of the vehicle and that is sent by the habitual-charging location tag generation unit 2520.

In this embodiment of this application, whether the vehicle is a home charging user is determined based on historical charging data of the user, so that authenticity of the determined result can be relatively high, which can further provide a reliable basis for subsequently determining a more proper reminding manner based on whether the vehicle is a home charging user.

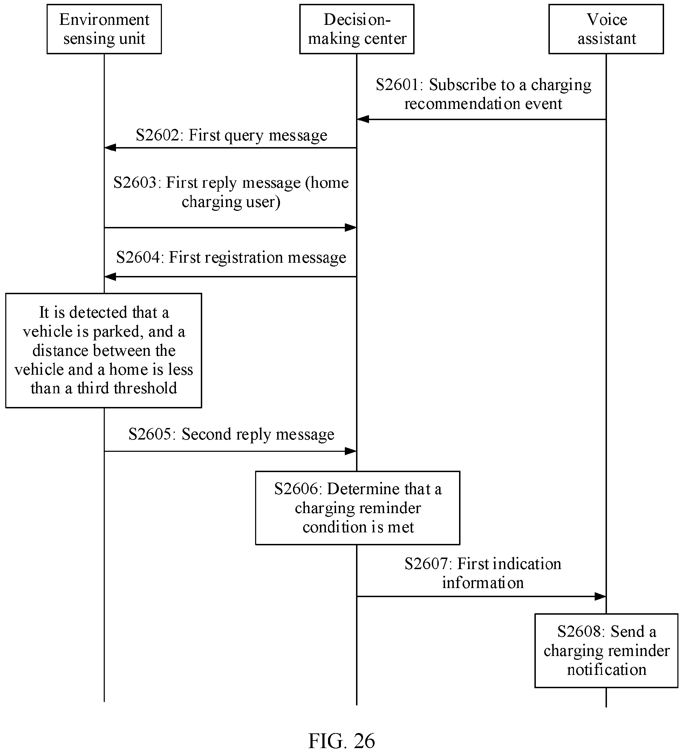

For example, the following describes, with reference to FIG. 26, an implementation method for sending a charging reminder notification. As shown in FIG. 26, the implementation method 2600 includes the following steps.

S2601: A voice assistant subscribes to a charging recommendation event from a decision-making center.

It should be understood that, in this embodiment of this application, an example in which a subject sending a charging reminder notification is a voice assistant is used for description. However, this is not limited thereto. The voice assistant may be alternatively replaced with a control unit of an in-vehicle infotainment system, a control unit of an electronic device that has a binding relationship with an in-vehicle infotainment system, or the like.

S2602: The decision-making center sends a first query message to an environment sensing unit.

The first query message is used to query one or more of the following: a habitual-charging battery level range of a user, a current remaining battery level of the vehicle, whether the vehicle is a home charging user, and a next-day temperature, and may be further used to query other information. This is not limited in this application.

It should be understood that the step S2602 is not performed only once. For example, query may be performed at a scheduled time every day, query may be performed when it is detected that the vehicle is started, query may be performed when it is detected that the vehicle is parked, or query may be performed periodically. In this way, a result queried by the decision-making center is a latest result. This is not limited in this application.

S2603: In response to the received first query message, the environment sensing unit sends a first reply message to the decision-making center.

The first reply message includes one or more of the following: information indicating the habitual-charging battery level range of the user, information indicating the current remaining battery level of the vehicle, information indicating whether the vehicle is a home charging user, and information indicating the next-day temperature, and may further include other information. This is not limited in this application.

S2604: The decision-making center sends a first registration message to the environment sensing unit.

Optionally, when the decision-making center determines, based on the first reply message, that the vehicle is a home charging user, the first registration message is used for subscribing to a user's home arrival reminder event; or when the decision-making center determines, based on the first reply message, that the vehicle is a non-home charging user, the first registration message is used for subscribing to a vehicle start reminder event.

S2605: In response to the received first registration message (used for subscribing to the user's home arrival reminder event), when the environment sensing unit detects that the vehicle is parked, and a distance between the vehicle and a home is less than a third threshold, send a second reply message to the decision-making center, where the second reply message includes information indicating that the user arrives home, or
in response to the received first registration message (used for subscribing to the vehicle start reminder event), when the environment sensing unit detects that the vehicle is started, send a second reply message to the decision-making center, where the second reply message includes information indicating that the user starts the vehicle.

S2606: The decision-making center determines whether a charging reminder condition is met.

A method for determining whether the charging reminder condition is met is already described in detail in the embodiments shown in FIG. 12 to FIG. 20A to FIG. 20D. For brevity, details are not described herein again.

S2607: In response to a subscription notification of the voice assistant, when the decision-making center determines that the charging reminder condition is met, send first indication information to the voice assistant, where the first indication information indicates the voice assistant to send a charging reminder notification.

Optionally, the first indication information includes information indicating a display form of the charging reminder notification.

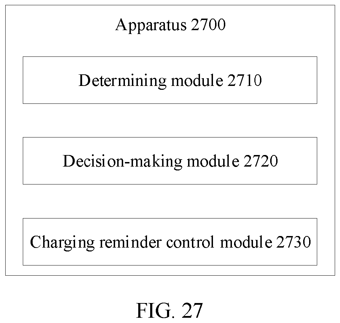

For example, FIG. 27 is a block diagram of a charging reminding apparatus 2700 according to an embodiment of this application. As shown in FIG. 27, the apparatus 2700 includes a determining module 2710, a decision-making module 2720, and a charging reminder control module 2730.

The determining module 2701 is configured to determine a habitual-charging battery level range (a first battery level value, a second battery level value) of a user based on charging behavior of the user, and/or is configured to determine a third battery level value of an electric vehicle.

Detailed explanations of the first battery level value, the second battery level value, the third battery level value, and the charging behavior of the user are already provided in the embodiments shown in FIG. 12 to FIG. 15. For brevity, details are not described herein again.

Optionally, the determining module 2701 is further configured to determine whether the user is a home charging user.

A detailed explanation about determining whether the user is a home charging user is already provided in the embodiments shown in FIG. 13 to FIG. 20A to FIG. 20D. For brevity, details are not described herein again.

The decision-making module 2720 is configured to determine whether a charging reminder notification needs to be sent to the user.

A method for determining whether the charging reminder notification needs to be sent to the user is already described in detail in the embodiments shown in FIG. 12 to FIG. 20A to FIG. 20D. For brevity, details are not described herein again.

The charging reminder control module 2730 is configured to: when the charging reminder notification needs to be sent to the user, send the charging reminder notification to the user.

Manners of sending the charging reminder notification to the user may vary in different vehicle statuses and the like. A specific manner is already described in detail in the embodiments shown in FIG. 12 to FIG. 20A to FIG. 20D. For brevity, details are not described herein again.

Different users have different psychological safety threshold ranges for a remaining battery level of the electric vehicle. In this embodiment of this application, the decision-making module can determine, according to a charging habit of the user, whether the electric vehicle driven by the user needs to be charged; and when it is determined that the electric vehicle needs to be charged, the charging reminder module reminds the user to perform charging. This can effectively avoid an anxiety emotion generated by the user because the remaining battery level of the electric vehicle is lower than the psychological safety threshold range of the user, thereby improving user experience.

An embodiment of this application further provides a computer-readable medium. The computer-readable medium stores program code, and when the computer program code is run on a computer, the computer is enabled to perform any method in FIG. 2 to FIG. 26.

An embodiment of this application further provides a chip, including at least one processor and a memory. The at least one processor is coupled to the memory, and is configured to read and execute instructions in the memory to perform any method in FIG. 2 to FIG. 26.

An embodiment of this application further provides a vehicle, including at least one processor and a memory. The at least one processor is coupled to the memory, and is configured to read and execute instructions in the memory to perform any method in FIG. 2 to FIG. 26.

The foregoing embodiments may be used separately, or may be used in combination to implement different technical effects.

In the embodiments provided in this application, the method according to embodiments of this application is described from a perspective in which an electronic device (for example, an in-vehicle infotainment system) serves as an execution body. To implement functions in the methods provided in the foregoing embodiments of this application, the electronic device may include a hardware structure and/or a software module, and the foregoing functions are implemented in a form of the hardware structure, the software module, or a combination of the hardware structure and the software module. Whether a function in the foregoing functions is performed in the form of the hardware structure, the software module, or the combination of the hardware structure and the software module depends on particular applications and design constraints of the technical solutions.

An embodiment of this application further provides an electronic device, including a display screen, a processor, a memory, a power button, an application, and a computer program. The foregoing components may be connected through one or more communication buses. One or more computer programs are stored in the memory and are configured to be executed by one or more processors. The one or more computer programs include instructions, and the instructions may be used to enable the electronic device to perform the steps of reminding a user to perform charging based on a charging habit of the user, a temperature, or the like in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that division into modules in this embodiment is an example, and is merely logical function division. During actual implementation, another division manner may be used.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to an actual requirement to achieve the objectives of the solutions of embodiments.

In addition, functional units in embodiments of this application may be integrated into one processing unit, each of the units may exist alone physically, or two or more units are integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or the part of the technical solutions may be implemented in a form of a software product. The computer software product is stored in a storage medium and includes several instructions for enabling a computer device (which may be a personal computer, a server, or a network device) to perform all or some of the steps of the methods in the embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging reminding method, wherein the method comprises:
determining, based on a habitual-charging battery level range of a user and a user type, whether the user needs to be reminded to perform charging, wherein a minimum battery level in the habitual-charging battery level range is a first battery level value, a maximum battery level in the habitual-charging battery level range is a second battery level value, the second battery level value is greater than or equal to the first battery level value, and the user type comprises a home charging user or a non-home charging user; and
sending a charging reminder notification to the user when it is determined that the user needs to be reminded to perform charging.

2. The method according to claim 1, wherein the determining, based on a habitual-charging battery level range of a user and a user type, whether the user needs to be reminded to perform charging comprises:
determining, based on a next-day temperature, the habitual-charging battery level range of the user, and the user type, whether the user needs to be reminded to perform charging.

3. The method according to claim 1, wherein the determining, based on a habitual-charging battery level range of a user and a user type, whether the user needs to be reminded to perform charging comprises:
when the user is a home charging user, a status of a charging object is switched to a non-moving state, a distance between the charging object and a home address is less than a third threshold, and a current remaining battery level of the charging object is less than or equal to the second battery level value, determining that the user needs to be reminded to perform charging.

4. The method according to claim 2, wherein the determining, based on a next-day temperature, the habitual-charging battery level range of the user, and the user type, whether the user needs to be reminded to perform charging comprises:
when the user is a home charging user, a status of a charging object is switched to a non-moving state, a distance between the charging object and a home address is less than a third threshold, the next-day temperature is lower than a first threshold or higher than a second threshold, and a current remaining battery level of the charging object is less than or equal to a third battery level value, determining that the user needs to be reminded to perform charging, wherein the third battery level value is greater than the second battery level value.

5. The method according to claim 3 or 4, wherein the sending a charging reminder notification to the user when it is determined that the user needs to be reminded to perform charging comprises:
when it is determined that the user needs to be reminded to perform charging, sending a first charging reminder to the user, wherein the first charging reminder comprises a first charging reminder notification displayed on a screen of the charging object, and further comprises a first charging reminder voice, the first charging reminder notification is associated with a first control, and the first control is used by the user to open a charging port of the charging object.

6. The method according to claim 1, wherein the determining, based on a habitual-charging battery level range of a user and a user type, whether the user needs to be reminded to perform charging comprises:
when the user is a non-home charging user and a charging object is in a moving state, periodically determining a current remaining battery level of the charging object; and
when the current remaining battery level of the charging object is less than or equal to the second battery level value, determining that the user needs to be reminded to perform charging.

7. The method according to claim 6, wherein the sending a charging reminder notification to the user when it is determined that the user needs to be reminded to perform charging comprises:
when the current remaining battery level of the charging object is less than or equal to the second battery level value and is greater than the first battery level value, sending a second charging reminder to the user, wherein the second charging reminder comprises a second charging reminder notification displayed on a screen of the charging object, and the second charging reminder notification is displayed in a form of a suggestion card in a lower area of the screen of the charging object.

8. The method according to claim 6, wherein the sending a charging reminder notification to the user when it is determined that the user needs to be reminded to perform charging comprises:
when the current remaining battery level of the charging object is less than or equal to the first battery level value, sending a third charging reminder to the user, wherein the third charging reminder comprises a third charging reminder notification displayed on a screen of the charging object, and further comprises a third charging reminder voice, the third charging reminder notification is associated with a third control, and the third control is used by the user to navigate to a target charging station.

9. The method according to claim 8, wherein the method further comprises:
when a next-day temperature is lower than a first threshold or higher than a second threshold, and the current remaining battery level of the charging object is less than or equal to a third battery level value, sending the third charging reminder to the user, wherein the third battery level value is greater than the second battery level value.

10. The method according to any one of claims 1 to 9, wherein the method further comprises:
sending a fourth charging reminder notification to the user when it is determined that the user needs to be reminded to perform charging, wherein the fourth charging reminder notification comprises one or more of the following options: a charging reminder card displayed on a screen of a first electronic device, a charging reminder voice sent by the first electronic device, an ambient light reminder sent by the charging object, or a fragrance reminder sent by the charging object, and the first electronic device has a binding relationship with the charging object.

11. The method according to claim 10, wherein the sending a fourth charging reminder notification to the user when it is determined that the user needs to be reminded to perform charging comprises:
when the user is a non-home charging user and the charging object is in a non-moving state, determining the current remaining battery level of the charging object at a scheduled time; and
when the current remaining battery level of the charging object is less than or equal to the second battery level value, sending the fourth charging reminder notification to the user.

12. The method according to claim 11, wherein the method further comprises:
when the next-day temperature is lower than the first threshold or higher than the second threshold, and the current remaining battery level of the charging object is less than or equal to the third battery level value, sending the fourth charging reminder to the user.

13. The method according to claim 2, wherein the method further comprises:
determining the third battery level value based on the habitual-charging battery level range.

14. The method according to claim 2, wherein the third battery level value is an endurance distance of 200 km.

15. The method according to claim 8, wherein the target charging station is associated with a prompt tag, and the prompt tag is used to prompt the user with entertainment information corresponding to the target charging station.

16. The method according to any one of claims 1 to 15, wherein the charging object is an electric vehicle.

17. A charging reminding method, wherein the method comprises:
determining, based on a next-day temperature, whether a user needs to be reminded to perform charging; and
sending a charging reminder notification to the user when it is determined that the user needs to be reminded to perform charging.

18. The method according to claim 17, wherein the determining, based on a next-day temperature, whether a user needs to be reminded to perform charging comprises:
determining, based on a user type and the next-day temperature, whether the user needs to be reminded to perform charging, wherein the user type comprises a home charging user or a non-home charging user.

19. The method according to claim 17 or 18, wherein the determining, based on a next-day temperature, whether a user needs to be reminded to perform charging comprises:
determining, based on a habitual-charging battery level range of the user, the next-day temperature, and the user type, whether the user needs to be reminded to perform charging, wherein a minimum battery level in the habitual-charging battery level range is a first battery level value, a maximum battery level in the habitual-charging battery level range is a second battery level value, and the second battery level value is greater than or equal to the first battery level value.

20. The method according to any one of claims 17 to 19, wherein the determining, based on a next-day temperature, whether a user needs to be reminded to perform charging comprises:
when the next-day temperature is lower than a first threshold or higher than a second threshold, and a remaining battery level of a charging object is less than or equal to a third battery level value, determining that the user needs to be reminded to perform charging.

21. The method according to claim 18, wherein the determining, based on a user type and the next-day temperature, whether the user needs to be reminded to perform charging comprises:
when the user is a home charging user, a status of a charging object is switched to a non-moving state, a distance between the charging object and a home address is less than a third threshold, the next-day temperature is lower than a first threshold or higher than a second threshold, and a remaining battery level of the charging object is less than or equal to a third battery level value, determining that the user needs to be reminded to perform charging.

22. The method according to claim 21, wherein the sending a charging reminder notification to the user when it is determined that the user needs to be reminded to perform charging comprises:
when it is determined that the user needs to be reminded to perform charging, sending a first charging reminder to the user, wherein the first charging reminder comprises a first charging reminder notification displayed on a screen of the charging object, and further comprises a first charging reminder voice, the first charging reminder notification is associated with a first control, and the first control is used by the user to open a charging port of the charging object.

23. The method according to claim 18, wherein the determining, based on a user type and the next-day temperature, whether the user needs to be reminded to perform charging; and sending a charging reminder notification to the user when it is determined that the user needs to be reminded to perform charging comprises:
when the user is a non-home charging user, it is detected that the charging object is started, the next-day temperature is lower than a first threshold or higher than a second threshold, and a current remaining battery level of the charging object is less than or equal to the third battery level value, determining that the user needs to be reminded to perform charging, and further sending a third charging reminder to the user, wherein the third charging reminder comprises a third charging reminder notification displayed on a screen of the charging object, and further comprises a third charging reminder voice, the third charging reminder notification is associated with a third control, and the third control is used by the user to navigate to a target charging station.

24. The method according to any one of claims 17 to 23, wherein the method further comprises:
sending a fourth charging reminder notification to the user when it is determined that the user needs to be reminded to perform charging, wherein the fourth charging reminder notification comprises one or more of the following options: a charging reminder card displayed on a screen of a first electronic device, a charging reminder voice sent by the first electronic device, an ambient light reminder sent by the charging object, or a fragrance reminder sent by the charging object, and the first electronic device has a binding relationship with the charging object.

25. The method according to claim 24, wherein the sending a fourth charging reminder notification to the user when it is determined that the user needs to be reminded to perform charging comprises:
when the user is a non-home charging user and the charging object is in a non-moving state, determining the current remaining battery level of the charging object at a scheduled time; and
when the next-day temperature is lower than the first threshold or higher than the second threshold, and the current remaining battery level of the charging object is less than or equal to the third battery level value, sending the fourth charging reminder notification to the user.

26. The method according to any one of claims 17 to 25, wherein the method further comprises:
determining the third battery level value based on the habitual-charging battery level range of the user, wherein the minimum battery level in the habitual-charging battery level range is the first battery level value, the maximum battery level in the habitual-charging battery level range is the second battery level value, the second battery level value is greater than or equal to the first battery level value, and the third battery level value is greater than the second battery level value.

27. The method according to any one of claims 17 to 25, wherein the third battery level value is an endurance distance of 200 km.

28. The method according to claim 23, wherein the target charging station is associated with a prompt tag, and the prompt tag is used to prompt the user with entertainment information corresponding to the target charging station.

29. The method according to any one of claims 17 to 28, wherein the charging object is an electric vehicle.

30. A charging reminding apparatus, wherein the apparatus comprises:
one or more processors;
one or more memories; and
one or more computer programs, wherein the one or more computer programs are stored in the one or more memories, the one or more computer programs comprise instructions, and when the instructions are executed by the one or more processors, the apparatus is enabled to perform the method according to any one of claims 1 to 16 or the method according to any one of claims 17 to 29.

31. A vehicle, wherein the vehicle comprises the apparatus according to claim 30.

32. A computer-readable storage medium, wherein the computer-readable storage medium stores a computer program, and when the computer program is executed by a computer, the computer is enabled to implement the method according to any one of claims 1 to 16 or the method according to any one of claims 17 to 29.

33. A computer program product comprising instructions, wherein when the computer program product runs on a computer, the computer is enabled to perform the method according to any one of claims 1 to 16 or the method according to any one of claims 17 to 29.

34. A chip, wherein the chip comprises a processor and a data interface, and the processor reads, through the data interface, instructions stored in a memory, to perform the method according to any one of claims 1 to 16 or the method according to any one of claims 17 to 29.
